# EUROPÄISCHE PATENTANMELDUNG

(11) **EP 2 631 581 A2**
(43) Veröffentlichungstag der Anmeldung: **28.08.2013**
(21) Anmeldenummer: 13156289.4
(22) Anmeldetag: 22.02.2013
(51) Int. Cl.: F26B 23/10, F26B 25/12

(54) **Trocknungsvorrichtung für eine Biogasanlage und ein Verfahren zum Trocknen eines Flüssigproduktes mit einer solchen Trocknungsvorrichtung**

(30) Priorität: 22.02.2012 DE 102012003379; 08.06.2012 DE 102012011269
(71) Anmelder: Tapken, Harmanus, 26219 Bösel (DE)
(72) Erfinder: Tapken, Harmanus, 26219 Bösel (DE)
(74) Vertreter: Tappe, Udo

(57) **Zusammenfassung**

Die Erfindung betrifft eine Trocknungsvorrichtung (10, 41, 60) für eine Biogasanlage zum Trocknen eines Flüssigproduktes, insbesondere von Biomasse, mit einem Trocknungsbereich (11), wobei mindestens ein Teil der zum Betrieb des Trocknungsbereiches (11) notwendigen Wärmeenergie von der Biogasanlage bereit gestellt ist. Um die Trocknung eines Flüssigproduktes zu vereinfachen ist eine den Trocknungsbereich (11) begrenzende erste Wand (15) mittels mindestens einer der Außenfläche der ersten Wand (15) zugeordneten Wärmezufuhreinrichtung zum Aufheizen des Trocknungsbereiches (11) von Außen erhitzbar ist, und eine Dampfzuführeinrichtung (48) zum Einleiten von überhitztem Trockendampf in den Trocknungsbereich (11) vorgesehen ist, wobei der Trockendampf beim Einleiten eine Temperatur über dem Siedepunkt des Flüssiganteils des Flüssigproduktes hat.

## Beschreibung

Die Erfindung betrifft eine Trocknungsvorrichtung für eine Biogasanlage zum Trocknen eines Flüssigproduktes, insbesondere von Biomasse, mit einem Trocknungsbereich, wobei mindestens ein Teil der zum Betrieb des Trocknungsbereiches notwendigen Wärmeenergie von der Biogasanlage bereit gestellt ist. Weiter betrifft die Erfindung ein Verfahren zum Trocknen eines Flüssigproduktes, insbesondere von Biomasse, mit einer erfindungsgemäßen Trocknungsvorrichtung, wobei das Flüssigprodukt einem Trocknungsbereich der Trocknungsvorrichtung zugeführt wird, und ein Flüssiganteil des Flüssigproduktes zum Trennen des Flüssiganteils von einem Feststoffanteil des Flüssigproduktes innerhalb des Trocknungsbereiches unter Verwendung von Wärmeenergie einer Biogasanlage und/oder eines Blockheizkraftwerkes verdampft wird.

Eine derartige Trocknungsvorrichtung und ein entsprechendes Verfahren sind aus der DE 10 2007 005 786 bekannt. Hierbei werden Gärreste einer Trocknungsanlage zugeführt, wobei Abgase eines Blockheizkraftwerkes zusammen mit den Gärresten in eine Trocknungskammer zum Trocknen der Gärreste eingeleitet werden. Hierbei werden Abgase des Blockheizkraftwerkes verwendet, die bei einer Verbrennung von Biogas aus einer Biogasanlage entstehen.

Nachteilig ist, dass das Abgas in das Innere der Trocknungsanlage geführt werden muss. Hierbei muss eine beständige Zuleitung von heißen Abgasen in das Innere der Trocknungsanlage und eine ebenso beständige Ableitung von abgekühlten Abgasen aus dem Inneren der Trocknungsanlage gewährleistet sein. Dies erfordert einen komplexen Aufbau und eine aufwendige Steuerung. Zudem ist diese Trocknungsanlage auf die Verwendung der Abgase aus einem Blockheizkraftwerk beschränkt. Andere, insbesondere nicht gasförmige, Wärmeträger sind nicht nutzbar.

Es ist daher das der Erfindung zugrunde liegende Problem, eine Trocknungsvorrichtung und ein Verfahren der eingangs genannten Art derart weiter zu entwickeln, dass die Trocknung eines Flüssigproduktes auf einfachere, effektivere und/oder wirtschaftlichere Weise durchführbar ist.

Insbesondere ist es auch ein der Erfindung zugrunde liegendes Problem, eine Vorrichtung und ein Verfahren anzugeben, um Organokohle auf effiziente und energiesparende Weise herstellen zu können. Unter dem Begriff Organokohle ist hierbei eine Kohle zu verstehen, die aus organischem Material besteht und/oder gewonnen wird. Aus pflanzlichen Material bestehende und/oder hergestellte Kohle ist auch unter den Bezeichnungen Pflanzenkohle oder Biokohle bekannt. Derartige Kohle bindet Kohlenstoffdioxid CO₂ sehr effektiv und dauerhaft, wie dies beispielsweise von der sogenannten Terra Petra bekannt. Darüber hinaus eignet sich die Organokohle als Bodenverbesserer und/oder als Trägermaterial für Düngemittel. Weiter kann die Organokohle zur Kompostierung und/oder Nährstofffixierung verwendet werden. Zudem kann Organokohle als Futtermittelzusatz und/oder Nahrungsmittelergänzung, insbesondere in der Viehzucht, eingesetzt werden.

Das der Erfindung zugrunde liegende Problem wird dadurch gelöst, dass bei einer Trocknungsvorrichtung der eingangs genannten Art eine den Trocknungsbereich begrenzende erste Wand mittels mindestens einer der Außenfläche der ersten Wand zugeordneten Wärmezufuhreinrichtung zum Aufheizen des Trocknungsbereiches von Außen erhitzbar ist, und eine Dampfzuführeinrichtung zum Einleiten von überhitztem Trockendampf in den Trocknungsbereich vorgesehen ist, wobei der Trockendampf beim Einleiten eine Temperatur über dem Siedepunkt des Flüssiganteils des Flüssigproduktes hat. Hinsichtlich des eingangs genannten Verfahrens wird das Problem dadurch gelöst, dass der Trocknungsbereich von Außen beheizt wird, und überhitzter Trockendampf in den Trocknungsbereich mit eine Temperatur über dem Siedepunkt des Flüssiganteils des Flüssigproduktes in den Trocknungsbereich eingeleitet wird.

Hierbei ist von Vorteil, dass das Aufheizen des Flüssigproduktes mittels der Innenfläche der ersten Wand erfolgt, die den Trocknungsbereich begrenzt. Hierbei wird die Innenfläche der ersten Wand mittels einer Wärmezufuhr von Außen aufgeheizt. Demnach ist ein beliebiger Wärmeträger mittels der Wärmezufuhreinrichtung in Kontakt mit der Außenfläche der ersten Wand bringbar. Vorzugsweise ist die Außenfläche der ersten Wand von dem Trocknungsbereich abgewandt und die Innenfläche der ersten Wand ist dem Trocknungsbereich zugewandt. Insbesondere ist das zu trocknende Flüssigprodukt innerhalb des Trocknungsbereiches angeordnet. Vorzugsweise weist die erste Wand ein wärmeleitfähiges Material auf. Die der Außenfläche der ersten Wand zugeführte Wärme durchdringt die erste Wand von Außen nach Innen und ist von der Innenfläche der ersten Wand an das zu trocknende Flüssigprodukt übertragbar.

Hierdurch ist eine Trocknungsvorrichtung mit einfacherem Aufbau und/oder geringeren Baumaßen realisierbar. Weiter ist die Energie unterschiedlicher Wärmeträger nutzbar. Insbesondere ist nicht nur die Abwärme aus Abgasen, insbesondere eines Blockheizkraftwerkes, nutzbar. Vielmehr ist vorzugsweise die Abwärme aus jeder Art von Fluiden, insbesondere Gasen und/oder Flüssigkeiten, auf einfache Weise zum Erhitzen des Flüssigproduktes und damit zum Trennen des Flüssiganteils vom Feststoffanteil des Flüssigproduktes verwendbar. Insbesondere im Zusammenhang mit einem Blockheizkraftwerk einer Biogasanlage lässt sich die beim Verbrennen des Biogases entstehende Abwärme besser und leichter nutzen.

Als Flüssigprodukt kann Biomasse, insbesondere Gärreste, Gülle und/oder Klärschlamm, eingesetzt werden. Beispielsweise sind die Gärreste einer Biogasanlage mittels der Trocknungsvorrichtung direkt an der Biogasanlage, insbesondere zu einem Düngemittel, weiter verarbeitbar. Im Rahmen der vorliegenden Erfindung kann unter einem Flüssigprodukt jedes organische, insbesondere pflanzliche und/oder tierische, Material verstanden werden, das fließfähig und/oder schüttfähig ist sowie einen Flüssiganteil, insbesondere in Form von zusammen mit dem Feststoffanteil gebundenem Wasser, hat.

Vorzugsweise ist der Trocknungsbereich ein gegenüber der Umgebung abgeschlossener Raum, in dem das Flüssigprodukt getrocknet und die Flüssigbestandteile als Dampf von dem Feststoffanteil getrennt werden.

Gemäß einer weiteren Ausführungsform weist die Wärmezufuhreinrichtung mindestens eine weitere Wand auf, die die erste Wand mindestens teilweise zur Ausbildung einer Doppelwand umgibt. Hierdurch ist die konstruktive Stabilität der Trocknungskammer verbesserbar. Zudem sind verbesserte Isolationseigenschaften realisierbar, wodurch ein unnötiger Wärmeverlust nach Außen, insbesondere an die Umgebung, reduzierbar ist. Darüber hinaus kann ein sich zwischen der ersten Wand und der weiteren Wand entstehender Zwischenraum eine zusätzliche Funktionalität aufweisen. Insbesondere erstreckt sich die weitere Wand über im Wesentlichen die gesamte Länge des Trocknungsbereiches und/oder der Außenfläche der ersten Wand. Vorzugsweise ist ein Wärmeträgermittel mittels eines Einlasses in die Doppelwand einleitbar und mittels eines Auslasses aus der Doppelwand ausleitbar. Somit ist der Zwischenraum zwischen der ersten Wand und der weiteren Wand zum Zuführen eines Wärmeträgermittels an die Außenfläche der ersten Wand nutzbar. Hierdurch ist eine Wärmezufuhreinrichtung auf einfache und effektive Weise realisierbar.

Nach einer Weiterbildung hat die Wärmezufuhreinrichtung mehrere, insbesondere voneinander unabhängige, Segmente zum Zuführen eines Wärmeträgermittels zu den Segmenten zugeordneten Teilflächen der Außenfläche der ersten Wand. Vorzugsweise umgeben die einzelnen Segmente die Außenfläche der ersten Wand ringförmig. Insbesondere sind die ringförmigen Segmente in axialer Richtung nebeneinander angeordnet, so dass die mehreren Segmente zusammen einen Zylinder bilden. Die einzelnen Segmente, insbesondere deren Zwischenräume, können mittels mindestens einer, insbesondere gemeinsamen, Trennwand voneinander getrennt sein. Insbesondere bilden jeweils unmittelbar benachbarte Segmente einen, vorzugsweise in Bezug auf eine Ummantelung der Außenfläche der ersten Wand, lückenlosen Verbund. Demnach kann ein Segment eine Teilfläche der Außenfläche der ersten Wand, mindestens eine Trennwand, vorzugsweise zwei Trennwände, und mindestens eine weitere Teilfläche der weiteren Wand umfassen. Vorzugsweise ist hierbei die Trennwand rechtwinklig zur ersten Wand und/oder zur weiteren Wand sowie zwischen der ersten Wand und der weiteren Wand angeordnet. Die Höhe der Trennwand bestimmt den Abstand und/oder den Zwischenraum zwischen der Außenfläche der ersten Wand und der weiteren Wand. Aufgrund der mehreren Segmente, kann die Trocknungsvorrichtung auch bei einem technischen Defekt, insbesondere einem Ausfall eines einzelnen Segmentes, weiter betrieben werden.

Gemäß einer weiteren Ausführungsform weist die Wärmezufuhreinrichtung, insbesondere jedes Segment, mindestens einen Wärmetauscher auf. Vorzugsweise ist hierbei mittels des Wärmetauschers die Abwärme der Biogasanlage, insbesondere eines Blockheizkraftwerkes, an ein Wärmeträgermittel mindestens teilweise übertragbar. Das Wärmeträgermittel kann als ein Fluid, insbesondere als ein Gas und/oder eine Flüssigkeit, ausgebildet sein. Bei einem Defekt eines Wärmetauschers fällt lediglich das zugehörige Segment hinsichtlich der Beheizung der Außenfläche der ersten Wand aus. Die anderen Wärmetauscher und zugehörigen Segmente sind weiterhin betriebsbereit, wodurch die Trocknungsvorrichtung weiter betreibbar ist. Hierdurch ist die Betriebssicherheit und/oder Betriebszuverlässigkeit verbesserbar. Insbesondere die Abwärme von Wasser, Öl und/oder Abgasen des Blockheizkraftwerkes ist auf den Wärmeträger übertragbar. Somit sind unterschiedliche Wärmequellen nutzbar. Vorzugsweise ist die Abwärme einer oder mehrerer beliebiger Wärmequellen, insbesondere eines Motors, Generators und/oder Kraftwerkes, nutzbar.

Ein Wärmträgermittel der Biogasanlage und/oder des Blockheizkraftwerkes, insbesondere Wasser, Öl und/oder Abgase, kann direkt der Außenfläche der ersten Wand zuführbar sein. Hierdurch ist ein Wärmetauscher verzichtbar, wodurch Wärmeverluste reduzierbar und der Aufbau der Trocknungsvorrichtung vereinfachbar ist. Die an einer Wärmequelle entstehende Wärme bzw. Abwärme ist somit unmittelbar der Außenfläche der ersten Wand zuführbar. Als Wärmeträgermittel sind heiße Abwässer, Öle und/oder Abgase nutzbar.

Vorzugsweise weist der Trocknungsbereich eine Trocknungskammer, insbesondere mit einem zylinderförmigen Innenraum, auf. Der Trocknungsbereich und/oder die Trocknungskammer kann als eine Druckkammer, insbesondere zum Realisieren eines Überdruckes im Trocknungsbereich und/oder in der Trocknungskammer, ausgebildet sein. Aufgrund eines Überdruckes in der Trocknungskammer ist die Trennung des Feststoffanteils und des verdampften Flüssiganteils aus dem Flüssigprodukt weiter verbesserbar. Der vorzugsweise mit Überdruck aus der Trocknungskammer austretende Dampf ist für eine nachfolgende Nutzung, beispielsweise zur Energierückgewinnung, verwendbar sein. Insbesondere ist unter Überdruck ein gegenüber einem, vorzugsweise natürlichen, Umgebungsdruck erhöhter Druck zu verstehen. Der Überdruck kann im Bereich von 0,5 bar bis 10 bar, insbesondere von 1 bar bis 5 bar, am meisten bevorzugt von 1 bar bis 2,5 bar liegen. Vorzugsweise handelt es sich bei dem verdampften Flüssiganteil im Wesentlichen um Wasserdampf.

Nach einer weiteren Ausführungsform kann der Trocknungsbereich ein Rohr, insbesondere einen Rohrschlangenwärmetauscher, aufweisen. Insbesondere ist der Trocknungsbereich als ein Rohr und/oder ein Rohrschlangenwärmetauscher ausgebildet. Vorzugsweise hat das Rohr einen Durchmesser von weniger als 100 cm, insbesondere von weniger als 50 cm, besonders bevorzugt von weniger als 20 cm. Ein Rohr und/oder ein Rohrschlangenwärmetauscher eignet sich insbesondere zum Trocknen von Flüssigprodukten mit einem sehr hohen Flüssiganteil, vorzugsweise mit einem Flüssiganteil am Flüssigprodukt von über 50 %. Bei einem Rohr oder Rohrschlangenwärmetauscher ist von besonderem Vorteil, dass aufgrund des Rohrquerschnittes ein geringeres Volumen des Flüssigproduktes als beispielsweise in einer großvolumigen Trocknungskammer in den Trocknungsbereich einbringbar ist. Hierdurch ist der Anteil einer direkten Kontaktfläche des zu verdampfenden Flüssigproduktes mit der, insbesondere von außen aufgeheizten, Innenfläche des Rohres oder Rohrschlangenwärmetauschers vergrößert. Insbesondere wird eine hohe Wärmeangriffsfläche bereit gestellt. Dadurch ist der Flüssiganteil des Flüssigproduktes besonders effizient und in kürzerer Zeit, insbesondere im Vergleich zu einer großvolumigen Trocknungskammer, verdampfbar.

In voneinander unabhängigen Ausführungen der Erfindung kann der Trocknungsbereich als eine Trocknungskammer oder als ein Rohr, insbesondere ein Rohrschlangenwärmetauscher, ausgebildet sein. Alternativ kann jedoch auch ein erster Trocknungsbereich und ein im Trocknungsprozess nachfolgender zweiter Trocknungsbereich vorgesehen sein. Der erste Trocknungsbereich und der zweite Trocknungsbereich können gleichartig ausgebildet sein, insbesondere jeweils als Trocknungskammer oder als Rohr. Vorzugsweise ist der erste Trocknungsbereich als ein Rohr, insbesondere ein Rohrschlangenwärmetauscher, und der zweite Trocknungsbereich als eine Trocknungskammer ausgebildet. Somit ist, insbesondere bei einem Flüssigprodukt mit einem sehr hohen Flüssiganteil, insbesondere von über 50 %, ein zweistufiges Trocknungsverfahren realisierbar. Hierbei wird ein erster Flüssiganteil des Flüssigproduktes im ersten Trocknungsbereich verdampft und ein zweiter Flüssiganteil des Flüssigproduktes wird im zweiten Trocknungsbereich verdampft. Hierdurch ist eine Trocknung des Flüssigproduktes und eine Separierung des Feststoffanteils von dem Flüssiganteil des Flüssigproduktes besonders effektiv realisierbar. Alternativ kann ausschließlich ein Rohrschlangenwärmetauscher als Trocknungsbereich vorgesehen sein, um das Flüssigprodukt zu verdampfen. Anschließend kann das verdampfte Flüssigprodukt als Dampf, insbesondere zum Antreiben einer Turbine, genutzt werden. Schließlich kann das verdampfte Flüssigprodukt einem Feststoffbrenner zugeführt werden, wobei vorzugsweise ein separat und von extern beschaffter Brennstoff und/oder ein aus dem Feststoffanteil des Flüssigproduktes gewonnener Brennstoff zum Betreiben des Feststoffbrenners verwendet wird.

Der Trocknungsbereich, insbesondere ein Innenraum des Trocknungsbereiches, kann mindestens eine rotierbare Mischeinrichtung aufweisen. Die Mischeinrichtung kann, relativ zu einer fest stehenden Begrenzung des Trocknungsbereiches, insbesondere zur fest stehenden Trocknungskammer, rotierbar sein. Die Mischeinrichtung ist vorzugsweise mittels eines Motors antreibbar. Die Mischeinrichtung kann sich über die im Wesentlichen gesamte Länge des Innenraums des Trocknungsbereiches und/oder der Trocknungskammer erstrecken. Aufgrund der Mischeinrichtung ist im Gebrauch der Inhalt des Trocknungsbereiches vermischbar und/oder verwirbelbar. Hierdurch wird das Trocknen des Flüssigproduktes weiter begünstigt. Die Mischeinrichtung kann Abstreifelemente aufweisen, mit denen insbesondere der Feststoffanteil des Flüssigproduktes von der Innenfläche der ersten Wand abstreifbar ist. Hierdurch ist ein Festbrennen von Feststoffanteilen an der Innenfläche der ersten Wand vermeidbar. Vorzugsweise hat der Trocknungsbereich und/oder die Trocknungskammer eine zylindrische Form. Alternativ kann der Trocknungsbereich und/oder die Trocknungskammer kegelförmig ausgebildet sein, wobei ein kleinerer Durchmesser des Trocknungsbereiches einem ersten Ende mit einem Produkteinlass und ein größerer Durchmesser des Trocknungsbereiches einem zweiten Ende mit einem Produktauslass zugeordnet ist. Dem Produkteinlass kann ein Vorratsbehälter zugeordnet sein. In dem Vorratsbehälter kann das zu trocknende Flüssigprodukt vor dem Einleiten in den Trocknungsbereich gesammelt werden. In dem Vorratsbehälter können pflanzliche und/oder tierische Materialen, insbesondere Abfälle, vorzugsweise Gülle, Gärreste und/oder Abwasser, gesammelt werden. Die Materialien können vor dem Einführen in den Vorrasbehälter mittels einer Zerkleinerungsvorrichtung zerkleinert werden. Mittels einer Pumpeinrichtung kann das Material aus dem Vorratsbehälter in den Trocknungsbereich gepumpt werden. Hierbei kann eine der Pumpeinrichtung zugeordnete Filtereinrichtung vorgesehen sein, um ein Zusetzen der Pumpeinrichtung zu vermeiden.

Der Trocknungsbereich, insbesondere der Innenraum des Trocknungsbereiches, kann rotationssymmetrisch zu einer Symmetrieachse ausgebildet sein. Weiter kann der Trocknungsbereich in Bezug auf die Längsrichtung des Trocknungsbereiches horizontal ausgerichtet sein. In diesem Fall ist die Symmetrieachse horizontal bzw. waagerecht ausgerichtet.

Gemäß einer weiteren Ausführungsform hat der Trocknungsbereich mindestens ein der Innenfläche der ersten Wand zugeordnetes Förderelement zum Bewirken einer Förderbewegung für das zu trocknende Flüssigprodukt, dessen Flüssiganteil und/oder Feststoffanteil. Somit ist das zu trocknende Flüssigprodukt, der Feststoffanteil und/oder der verdampfte Flüssiganteil innerhalb des Trocknungsbereiches in eine vorgegebene Förderbewegung versetzbar. Insbesondere erfolgt die Förderbewegung von einem ersten Ende des Trocknungsbereiches zu einem zweiten Ende des Trocknungsbereiches. Hierbei kann dem ersten Ende mindestens ein Produkteinlass und dem zweiten Ende mindestens ein Produktauslass zugeordnet sein. Vorzugsweise erstreckt sich das, insbesondere als Schneckenwelle ausgebildete, Förderelement in Längsrichtung des Trocknungsbereiches. Hierbei kann sich das Förderelement über im Wesentlichen die gesamte Länge des Trocknungsbereiches und/oder den Innenraum des Trocknungsbereiches erstrecken. Vorzugsweise ist das Förderelement mindestens teilsweise in dem Zwischenraum zwischen der ersten Wand und der weiteren Wand aufgenommen, ohne sich in den Innenraum des Trocknungsbereiches zu erstrecken. Hierdurch ist eine Behinderung der Mischeinrichtung vermeidbar.

Das Förderelement kann einem oberen und/oder seitlichen Bereich der Innenfläche der ersten Wand des Trocknungsbereiches zugeordnet sein. Insbesondere sind mehrere Förderelemente, vorzugsweise gleichmäßig verteilt, im Umfangsbereich der ersten Wand angeordnet. Das Förderelement, insbesondere die Fördergeschwindigkeit, kann mittels einer Steuerung steuerbar sein. Somit ist die Aufenthaltsdauer des zu trocknenden Flüssigproduktes, des Feststoffanteils und/oder des verdampften Flüssiganteils in dem Trocknungsbereich steuerbar, wodurch verbesserte Trocknungsergebnisse erreichbar sind.

Nach einer weiteren Ausführungsform ist eine Abführeinrichtung zum Abführen der voneinander getrennten Flüssiganteile und Feststoffanteile des Flüssigproduktes aus dem Trocknungsbereich, insbesondere mittels eines Produktauslasses, vorgesehen. Hierbei werden der verdampfte Flüssiganteil und der Feststoffanteil gemeinsam mittels der Abführeinrichtung aus dem Trocknungsbereich abgeführt. Die Abführeinrichtung kann eine Förderschnecke und/oder eine Pressschnecke aufweisen. Hiermit lässt sich insbesondere der Feststoffanteil auf effektive Weise aus dem Trocknungsbereich herausführen.

Nach einer auch eigenständig und unabhängig von der vorliegenden Erfindung denkbaren Ausführungsform weist die Abführeinrichtung einerseits eine separate Dampfabführeinrichtung zum Abführen des verdampften Flüssiganteils und andererseits einen Feststoffauslass zum Abführen des Feststoffanteils aus dem Trocknungsbereich auf. Der Feststoffauslass kann als ein Produktauslass an einem unteren Ende und/oder einem Bodenbereich des Trocknungsbereiches ausgebildet sein. Da sich der Feststoffanteil aufgrund der auf diesen wirkenden Schwerkraft am unteren Ende und/oder dem Bodenbereich des Trocknungsbereiches ansammelt, wird ein Abführen des Feststoffanteils mit einer am unteren Ende und/oder im Bodenbereich angeordneten Abführeinrichtung bzw. Feststoffauslass vereinfacht. Die Dampfabführeinrichtung ist vorzugsweise im Bereich einer Rotationsachse und/oder Symmetrieachse des Trocknungsbereiches angeordnet. Vorzugsweise ist die Dampfabführeinrichtung innerhalb einer oberen Hälfte des Trocknungsbereiches positioniert. Hierdurch lässt sich der verdampfte und aufsteigende Flüssiganteil auf einfache Weise aus dem Trocknungsbereich abführen.

Vorzugsweise ist eine Zuführeinrichtung zum Zuführen des Flüssigproduktes in den Trocknungsbereich, insbesondere mittels eines Produkteinlasses, vorgesehen. Die Zuführeinrichtung kann eine Förderschnecke und/oder Pressschnecke aufweisen. Insbesondere ein weniger fließfähiges und/oder schüttfähiges Flüssigprodukt, wie beispielsweise Pflanzenmaterial und/oder tierische Abfälle, sind hierdurch mit einer steuerbaren Fördermenge in den Trocknungsbereich einbringbar.

Gemäß einer auch eigenständig und unabhängig von der vorliegenden Erfindung denkbaren Ausführungsform ist eine Dampfzuführeinrichtung zum Einleiten von Trockendampf in den Trocknungsbereich vorgesehen. Hierbei dient der Trockendampf zum Erhitzen des Flüssigproduktes in dem Trocknungsbereich, wodurch der Flüssiganteil des Flüssigproduktes verdampft wird. Somit wird durch das Einleiten eines hinreichend heißen Trockendampfes in den Trocknungsbereich der Feststoffanteil vom Flüssiganteil getrennt. Das Trocknen des Flüssigproduktes durch Einleiten von Trockendampf kann entweder zusätzlich zu einer anderen Art der Wärmezufuhr, insbesondere zum Aufheizen des Trocknungsbereichs von Außen, oder ausschließlich durch das Einleiten von heißem Trockendampf erfolgen. Vorzugsweise hat der Trockendampf beim Einleiten eine Temperatur über dem Siedepunkt des Flüssiganteils des Flüssigproduktes. Insbesondere wird der Trockendampf als überhitzter Dampf in den Trocknungsbereich eingeleitet. Dampf entsteht durch ein Erhitzen einer Flüssigkeit. Erhitzt man den entstandenen Dampf weiter, entsteht ein so genannter überhitzter Dampf. Diesem überhitzten Trockendampf fehlt Flüssigkeit. Wird der überhitzte Trockendampf in Kontakt mit einem feuchten Material, insbesondere einem Flüssigprodukt, gebracht, so entzieht der überhitzte Trockendampf dem feuchten Material die Feuchtigkeit. Dies erfolgt solange bis der Trockendampf mit Flüssigkeit gesättigt ist. Vorzugsweise wird Wasserdampf als Dampf bzw. Trockendampf verwendet. Der Trockendampf und/oder Wasserdampf kann beim Einleiten in den Trocknungsbereich eine Temperatur von über 100°C, vorzugsweise von über 120°C, aufweisen. Vorzugsweise ist der Trockendampf vor dem Einleiten in den Trocknungsbereich mittels eines Wärmetauschers über Abwärme der Biogasanlage und/oder eines Blockheizkraftwerkes erhitzbar. Vorzugsweise wird das zu trocknende Flüssigprodukt zum Verdampfen des Flüssiganteils im Trocknungsbereich auf eine Temperatur im Bereich von 120°C bis 250°C, insbesondere im Bereich von 180°C bis 220°C, besonders bevorzugt von 200 °C, erhitzt.

Der Dampf bzw. Trockendampf, der Flüssigkeit aus dem Flüssigprodukt aufgenommen hat, insbesondere der mit Flüssigkeit gesättigte Dampf, kann, insbesondere mittels der Dampfabführeinrichtung, aus dem Trocknungsbereich abgeführt werden. Mittels eines Dampfabscheiders kann Flüssigkeit aus diesem abgeführten Dampf abgeschieden werden. Alternativ oder zusätzlich kann ein überschüssiger Dampfanteil, insbesondere ein verdampfter Flüssiganteil des Flüssigproduktes, aus dem abgeführten Dampf abgetrennt werden. Der überschüssige Dampfanteil und/oder der verdampfte Flüssiganteil kann, insbesondere nach einer Filterung und/oder Geruchsverbrennung, an die Umgebung abgegeben werden.

Vorzugsweise wird der aus dem Trocknungsbereich abgeführte Dampf erneut, insbesondere mittels eines Wärmetausches, erhitzt, so dass der Dampf als überhitzter Trockendampf erneut in den Trocknungsbereich einleitbar ist. Somit kann der Trockendampf in einem Kreislauf zirkulierend mehrfach verwendet werden. Hierdurch wird eine energiesparende und/oder effektive Trocknung des Flüssigproduktes begünstigt.

Nach einer auch eigenständig und unabhängig von der vorliegenden Erfindung denkbaren Ausführungsform sind eine Turbine und/oder ein Stirlingmotor vorgesehen. Vorzugsweise sind die Turbine und/oder der Stirlingmotor mit aus dem Trocknungsbereich abgeführtem Dampf antreibbar. Die Turbine ist vorzugsweise als eine Dampfturbine ausgebildet. Somit ist der aus dem Trocknungsbereich abgeführte Dampf, insbesondere mit Leitungen, einer Turbine und/oder einem Stirlingmotor zuführbar. Die Turbine und/oder der Stirlingmotor können elektrische Energie erzeugen.

Gemäß einer ebenfalls auch eigenständig und unabhängig von der vorliegenden Erfindung denkbaren Ausführungsform ist eine, insbesondere dem Trocknungsbereich nachgeschaltete, Feststoffabtrenneinrichtung zum Abtrennen von Feststoffen aus dem, insbesondere aus dem Trocknungsbereich abgeführten, Dampf vorgesehen. In dem aus dem Trocknungsbereich abgeführten Dampf können sich Feststoffe des Feststoffanteils des Flüssigproduktes als Schwebteilchen und/oder Aerosolpartikel befinden. Diese Feststoffe sind mit der Feststoffabtrenneinrichtung aus dem abgeführten Dampf heraus filterbar. Vorzugsweise werden die heraus gefilterten Feststoffe dem aus dem Trocknungsbereich abgeführten Feststoffanteil zugefügt. Insbesondere ist die Feststoffabtrenneinrichtung unmittelbar dem Trocknungsbereich nachgeschaltet, um eine Reinigung des abgeführten Dampfes vor einer weiteren Verwendung des abgeführten Dampfes zu gewährleisten. Hierdurch wird die Gefahr einer Beschädigung und/oder eines vorzeitigen Verschleißes von den Dampf nutzenden Einrichtungen, wie beispielsweise einer Turbine, einem Stirlingmotor und/oder einem Feststoffbrenner, erheblich reduziert. Alternativ kann die Feststoffabtrenneinrichtung einer Turbine nachgeschaltet sein. Somit wird der aus dem Trocknungsbereich abgeführte Dampf zunächst der Turbine, insbesondere zum Erzeugen elektrischer Energie, zugeführt. Erst hiernach wird der abgeführte Dampf der Feststoffabtrenneinrichtung zum Reinigen des Dampfes von mitgeführten Feststoffen zugeführt. Hiernach kann der von Feststoffen gereinigte Dampf an die Umgebung abgegeben oder einer weiteren Verwendung zugeführt werden.

Nach einer weiteren ebenfalls auch eigenständig und unabhängig von der vorliegenden Erfindung denkbaren Ausführungsform ist eine Vorreinigungseinrichtung zum Reinigen und/oder Filtern des aus dem Trocknungsbereich abzuführenden Dampfes vorgesehen. Vorzugsweise ist die Vorreinigungseinrichtung innerhalb des Trocknungsbereiches angeordnet. Insbesondere ist die Vorreinigungseinrichtung einer Dampfabführeinrichtung vorgeschaltet. Die Vorreinigungseinrichtung kann als ein Vorfilter für den aus dem Trocknungsbereich abzuführenden Dampf ausgebildet sein. Weiter kann die Vorreinigungseinrichtung rotierbar sein, wobei vorzugsweise die Vorreinigungseinrichtung einer Mischeinrichtung zugeordnet ist. Die Vorreinigungseinrichtung kann zusammen mit der, insbesondere rotierbaren, Mischeinrichtung und/oder mittels eines eigenen Motors, insbesondere Elektromotors, rotierbar sein.

Beim Abführen des Dampfes aus dem Trocknungsbereich über eine Dampfabführeinrichtung können Feststoffe des Flüssigproduktes, insbesondere Schwebteilchen und/oder Aerosole, zusammen mit den Dampf in die Dampfabführeinrichtung gesogen werden. Hierbei besteht die Gefahr, dass die Dampfabführeinrichtung und/oder weitere nachfolgende Einrichtungen mit den Feststoffen zugesetzt werden und/oder ein erhöhter Materialverschleiß verursacht wird. Mittels der Vorreinigungseinrichtung können Feststoffe im Dampf und/oder der Feststoffanteil des Flüssigproduktes innerhalb des Trocknungsbereiches zurück gehalten werden. Ein Mitreißen oder Mitführen der Feststoffe und/oder des Feststoffanteils über den abgeführten Dampf wird mindestens deutlich reduziert, wodurch die Gefahr einer Beschädigung oder eines Ausfalls nachfolgender Einrichtungen deutlich vermindert wird. Die Vorreinigungseinrichtung kann ein, insbesondere feinporiges, Filterelement und/oder Siebelement aufweisen. Die Poren des Filterelementes und/oder Siebes weisen einen Durchmesser auf, um Feststoffe und/oder den Feststoffanteil mindestens weitgehend im Trocknungsbereich zurück zu halten, wobei gleichzeitig eine Durchlässigkeit für den abzuführenden Dampf gewährleistet ist. Vorzugsweise beträgt der Durchmesser der Poren weniger als 10 mm, insbesondere weniger als 5 mm, besonders bevorzugt weniger als 2 mm.

Zum Reinigen der Vorreinigungseinrichtung kann die Vorreinigungseinrichtung für eine vorgegebene Zeitdauer in eine Rotation mit, insbesondere gegenüber der Drehgeschwindigkeit der Mischeinrichtung, erhöhter Drehgeschwindigkeit versetzt werden. Eine in diesem Sinne erhöhte Drehgeschwindigkeit liegt insbesondere dann vor, wenn die Vorreinigungseinrichtung verstopfende Feststoffe und/oder Teile des Feststoffanteils aufgrund der auf diese wirkenden Fliehkräfte aus der Vorreinigungseinrichtung geschleudert werden. Hierdurch wird die gewünschte Reinigung erreicht und ein mindestens teilweises Zusetzen der Vorreinigungseinrichtung weitgehend rückgängig gemacht oder verhindert.

Vorzugsweise ist eine Pelletiereinrichtung zum Herstellen von Pellets aus dem Feststoffanteil des Flüssigproduktes vorgesehen. Derartige Pellets lassen sich auf einfache Weise lagern und/oder transportieren. Der aus dem Trocknungsbereich abgeführte Feststoffanteil kann der Pelltiereinrichtung mittels einer Fördereinrichtung, insbesondere automatisch, zugeführt werden. Somit ist eine automatische Weiterverarbeitung des getrockneten Feststoffanteils des Flüssigproduktes zu Pellets realisierbar. Hierbei kann die Pelletiereinrichtung eine Zerkleinerungseinrichtung zum Zerkleinern des zugeführten Feststoffanteils aufweisen. Weiter kann die Pelletiereinrichtung eine Pelletierpresse aufweisen, die sich an die Zerkleinerungseinrichtung anschließt, um den zerkleinerten Feststoffanteil zu Pellets zu pressen.

Nach einer auch eigenständig und unabhängig von der vorliegenden Erfindung denkbaren Ausführungsform ist ein Feststoffbrenner vorgesehen. Mittels des Feststoffbrenners kann der getrocknete Feststoffanteil aus dem Trocknungsbereich, insbesondere in Form von Pellets, verkohlt werden. Alternativ oder zusätzlich kann ein dem Flüssiganteil, insbesondere dem aus dem Trocknungsbereich abgeführten Dampf, anhaftender Geruch, insbesondere Geruchsstoffe und/oder Schadstoffe, mit dem Feststoffbrenner verbrannt werden. Vorzugsweise erfolgt die Geruchsstoff- und/oder Schadstoffverbrennung, insbesondere bei Wasserdampf, bei einer Temperatur von über 700°C. Hierdurch sind Schadstoffe im Dampf, insbesondere Ammoniak, verbrennbar. Eine verbesserte Verbrennung ist durch den Einsatz bzw. das Einleiten von Harnstoff in den Feststoffbrenner während des Verbrennungsprozesses erreichbar. Insbesondere ein aus der Offenlegungsschrift DE 195 08 140 A1 bekannter Feststoffbrenner ist zur Verwendung im Zusammenhang mit der vorliegenden Erfindung verwendbar, auf deren Beschreibung hinsichtlich Aufbau und Funktionsweise des Feststoffbrenners hiermit Bezug genommen wird.

Vorzugsweise ist mit dem Feststoffbrenner der aus dem Trocknungsbereich abgeführte Feststoffanteil des Flüssigproduktes zu Organokohle verkohlbar. Im Rahmen der vorliegenden Erfindung ist unter dem Begriff Organokohle eine Kohle zu verstehen, die aus organischem Material, insbesondere pflanzlichen und/oder tierischen Material, besteht und/oder gewonnen wird. Aus pflanzlichen Material bestehende und/oder hergestellte Kohle ist auch unter den Bezeichnungen Pflanzenkohle oder Biokohle bekannt. Gemäß der vorliegenden Erfindung ist jedoch auch tierisches Material zu Kohle verarbeitbar. Daher wird hier Organokohle als Oberbegriff für Kohle aus pflanzlichen und/oder tierischen Material verwendet. Organokohle eignet sich als Bodenverbesserer und/oder als Trägermaterial für Düngemittel. Weiter kann die Organokohle zur Kompostierung und/oder Nährstofffixierung verwendet werden. Zudem kann Organokohle als Futtermittelzusatz und/oder Nahrungsmittelergänzung, insbesondere in der Viehzucht, eingesetzt werden.

Somit lässt sich mittels der Erfindung ein großes Volumen eines Flüssigproduktes über das Verdampfen des Flüssiganteils auf ein erheblich geringeres Feststoffvolumen reduzieren. Mittels der vorgeschlagenen Weiterverarbeitung, insbesondere der Verkohlung des getrockneten Feststoffanteils des Flüssigproduktes, wird hochwertige Organokohle als Endprodukt gewonnen. Dieses hochwertige Endprodukt ist aufgrund der Nutzung der Abwärme einer Biogasanlage und/oder eines Blockheizkraftwerkes zudem besonders energiesparend herstellbar.

Vorzugsweise ist ein Stirlingmotor dem Feststoffbrenner zugeordnet, wobei zum Antreiben des Stirlingmotors die Abwärme des Feststoffbrenners genutzt wird. Mittels des Stirlingmotors kann elektrische Energie erzeugt werden. Somit wird die Abwärme des Feststoffbrenners zur Erzeugung von weiter nutzbarer Energie verwendet.

Insbesondere ist die Abwärme der Abgase des Feststoffbrenners, des Stirlingmotors, der Turbine und/oder des aus dem Trocknungsbereich abgeführten Dampfes, insbesondere mittels eines Wärmetauschers, zum Beheizen des Trocknungsbereiches, zum Erzeugen von Warmwasser und/oder zum Beheizen eines Stalls verwendbar. Vorzugsweise werden die Abgase eines Blockheizkraftwerkes zunächst zum Aufheizen des Trocknungsbereiches und anschließend, insbesondere mittels eines Wärmetauschers, zum Erwärmen von Wasser genutzt, wodurch Warmwasser bereit gestellt ist.

Von besonderem Vorteil ist eine Biogasanlage und/oder ein Blockheizkraftwerk mit einer erfindungsgemäßen Trocknungsvorrichtung, wobei vorzugsweise die Trocknungsvorrichtung mit einem Behältnis für Gärreste und/oder mit dem Blockheizkraftwerk zum Verwenden der Abwärme des Blockheizkraftwerkes verbunden ist. Hierbei wird mittels der Trocknungsvorrichtung und der Ausnutzung der Abwärme des Blockheizkraftwerkes die Energieeffizienz der gesamten Biogasanlage verbessert. Der gewonnene und getrocknete Feststoffanteil ist beispielsweise als ein Düngemittel nutzbar.

Gemäß einer auch eigenständig und unabhängig denkbaren Ausführungsform des erfindungsgemäßen Verfahrens wird überhitzter Trockendampf, insbesondere Wasserdampf, mit einer Temperatur über dem Siedepunkt des Flüssiganteils des Flüssigproduktes in den Trocknungsbereich eingeleitet. Insbesondere hat der Trockendampf beim Einleiten in den Trocknungsbereich eine Temperatur von über 100°C, vorzugsweise von über 120°C. Insbesondere wird der Flüssiganteil des Flüssigproduktes im Trocknungsbereich verdampft. Hierbei kann das Verdampfen des Flüssiganteils und damit die Trennung des Flüssiganteils von dem Feststoffanteil des Flüssigproduktes allein mittels des Einleitens des Trockendampfes in den Trocknungsbereich erreicht werden. Alternativ kann das Einleiten des Trockendampfes zusätzlich zum Beheizen des Trocknungsbereiches von Außen erfolgen. Hierdurch wird eine effektivere und/oder schnellere Trocknung erreicht.

Nach einer ebenfalls auch eigenständig und unabhängig denkbaren Weiterbildung wird der aus dem Trocknungsbereich abgeführte Dampf zum Antreiben einer Turbine und/oder eines Stirlingmotors, insbesondere zum Erzeugen von elektrischer Energie, verwendet. Somit ist der im Trocknungsbereich entstehende Dampf zur Energiegewinnung nutzbar.

Vorzugsweise wird der aus dem Trocknungsbereich abgeführte Feststoffanteil zu Pellets verarbeitet. Derartige Pellets lassen sich einfach lagern, transportieren und/oder weiter verarbeiten. Insbesondere sind Pellets schüttfähig und/oder fließfähig, wodurch insbesondere automatische Verarbeitungsprozesse für die Verwendung von Pellets realisierbar sind.

Gemäß einer auch eigenständig und unabhängig von der vorliegenden Erfindung denkbaren Ausführungsform wird ein Feststoffbrenner mit dem aus dem

Trocknungsbereich abgeführten Feststoffanteil, insbesondere den Pellets, beschickt. Vorzugsweise wird der Feststoffanteil, insbesondere die Pellets, mittels des Feststoffbrenners zu Organokohle verkohlt. Somit steht ein hochwertiges Produkt zur Verfügung, dass auf besonders Energie sparende Weise herstellbar ist. Vorzugsweise wird der aus dem Trocknungsbereich abgeführte Dampf dem Feststoffbrenner zum Verbrennen von Geruchsstoffen zugeführt. Der gegebenenfalls zur Energieerzeugung, bzw. Energierückgewinnung genutzte und/oder gereinigte Dampf kann abschließend ohne negative Beeinflussung der Umwelt, insbesondere rückstandsfrei, an die Umgebung abgegeben werden.

Von besonderem Vorteil ist ein Verfahren zur Herstellung von Organokohle mit einer erfindungsgemäßen Vorrichtung und/oder einem erfindungsgemäßen Verfahren. Insbesondere wird organisches Material, vorzugsweise pflanzliches und/oder tierisches Material, mit einem hohen Flüssiganteil, insbesondere von über 50 %, zu Organokohle umgewandelt. Hierfür kann das organische Material bzw. organische Flüssigprodukt vor der Verkohlung in einem Feststoffbrenner zum mindestens teilweisen Verdampfen des Flüssiganteils einer erfindungsgemäßen Trocknungsvorrichtung zugeführt werden. Vorzugsweise erfolgt anschließend eine Separierung des Feststoffanteils von dem verdampften Flüssiganteil. Ein Feststoffanteil mit einem geringen Flüssiganteil, insbesondere von weniger als 50 %, ist zur Verkohlung in einem Feststoffbrenner geeignet.

Nachfolgend wird die Erfindung anhand der Figuren näher erläutert. Es zeigen:
- Fig. 1: eine geschnittene schematische Seitenansicht einer ersten erfindungsgemäßen Trocknungsvorrichtung,
- Fig. 2: einen geschnittenen schematischen Querschnitt der erfindungsgemäßen Trocknungsvorrichtung gemäß Fig. 1,
- Fig. 3: eine geschnittene schematische Seitenansicht einer zweiten erfindungsgemäßen Trocknungsvorrichtung,
- Fig. 4: eine geschnittene schematische Seitenansicht einer weiteren erfindungsgemäßen Trocknungsvorrichtung,
- Fig. 5: eine schematische Darstellung eines Flussdiagramms für ein erstes erfindungsgemäßes Verfahren für eine erfindungsgemäße Trocknungsvorrichtung, und
- Fig. 6: eine schematische Darstellung eines Flussdiagramms für ein weiteres erfindungsgemäßes Verfahren für eine erfindungsgemäße Trocknungsvorrichtung.

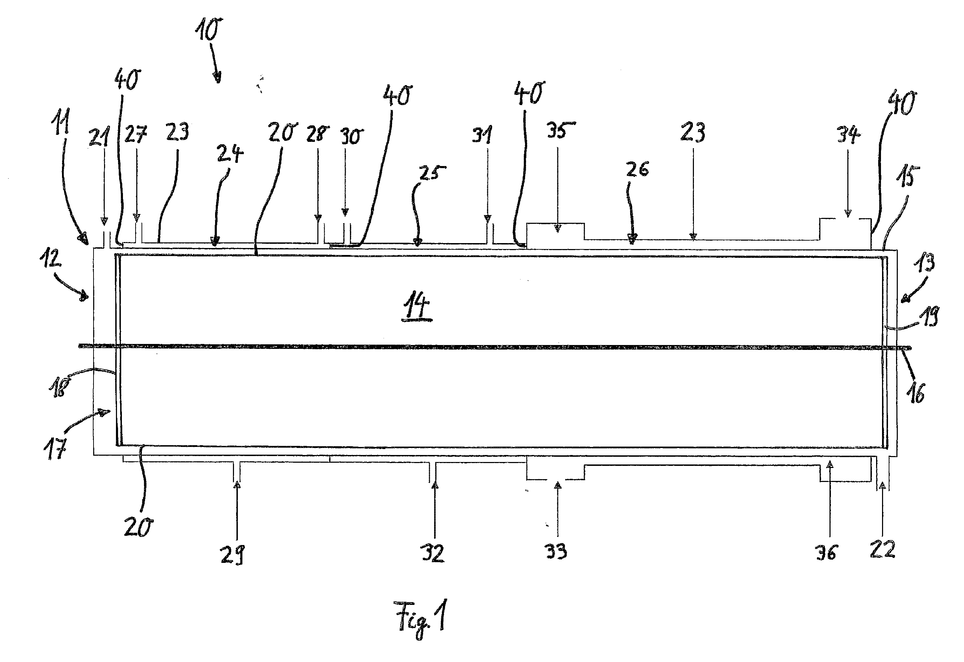

Fig. 1 zeigt eine geschnittene schematische Seitenansicht einer ersten erfindungsgemäßen Trocknungsvorrichtung 10. Die Trocknungsvorrichtung 10 hat einen Trocknungsbereich 11. Der Trocknungsbereich 11 ist bei diesem Ausführungsbeispiel als eine Trocknungskammer 11 ausgebildet. Alternativ kann der Trocknungsbereich 11 als eine Rohrleitung oder ein Rohrschlangenwärmetauscher ausgebildet sein. Die Trocknungskammer 11 hat eine zylindrische Form und ist in Bezug auf die Längsausrichtung der Trocknungskammer 11 waagerecht ausgerichtet. Hierbei ist die Trocknungskammer 11 rotationssymmetrisch zu einer Symmetrieachse ausgebildet. In dem hier gezeigten Ausführungsbeispiel hat die Trocknungskammer 11 eine Länge von etwa 4.000 mm und einen Durchmesser von etwa 1.000 mm.

Die Trocknungskammer 11 hat ein erstes Ende 12 und ein von dem ersten Ende 12 abgewandtes zweites Ende 13. Stirnflächen im Bereich des ersten Endes 12 und des zweiten Endes 13 sind zum Warten und Reinigen eines Innenraums 14 der Trocknungskammer 11 lösbar mit der Trocknungskammer 11 verbunden. In dem hier gezeigten Ausführungsbeispiel ist die Trocknungskammer 11 bei geschlossenen Stirnflächen luftdicht abgeschlossen und bildet eine Druckkammer.

Die Trocknungskammer 11 weist einen Innenraum 14 auf. Der Innenraum 14 der Trocknungskammer 11 ist mittels einer ersten Wand 15 begrenzt. Die erste Wand 15 hat eine zylindrische Gestalt und einen ringförmigen Querschnitt. Innerhalb der Trocknungskammer 11 und in dem Innenraum 14 ist eine Antriebsachse 16 angeordnet. Die Antriebsachse 16 ist in Bezug auf einen Querschnitt der Trocknungskammer 11 konzentrisch bzw. koaxial zum Mittelpunkt der Symmetrieachse der Trocknungskammer 11 positioniert. Die Antriebsachse 16 erstreckt sich über die gesamte Länge der Trocknungskammer 11 und ist in diesem Beispiel durch die Stirnflächen am ersten Ende 12 und am zweiten Ende 13 hindurchgeführt. Weiter ist die Antriebsachse 16 mittels eines hier nicht näher dargestellten Antriebes antreibbar.

An der Antriebsachse 16 ist eine Mischeinrichtung 17 angeordnet, die mittels der Antriebsachse 16 relativ zur fest stehenden Trocknungskammer 11 rotierbar ist. In dem hier gezeigten Ausführungsbeispiel weist die Mischeinrichtung 17 im Bereich des ersten Endes 12 und des zweiten Endes 13 jeweils eine kreuzförmige Halterung 18 bzw. 19 auf. Zwischen den Halterungen 18, 19 sind bei dem hier gezeigten Ausführungsbeispiel vier Stahlseile 20 gespannt, die hier aus Edelstahl ausgebildet sind. Die Stahlseile 20 verlaufen entlang einer Innenfläche der ersten Wand 15. Somit dienen die Stahlseile 20 zugleich als Abstreifelemente, um an der Innenfläche der ersten Wand 15 abgelagertes Material von der ersten Wand 15 abzulösen.

Im Bereich des ersten Endes 12 ist ein Produkteinlass 21 angeordnet, mit dem ein Flüssigprodukt, wie beispielsweise Gärreste, Gülle oder Klärschlamm in die Trocknungskammer 11 einleitbar ist. Bei der hier gezeigten Ausführungsform ist der Produkteinlass 21 einer Oberseite der Trocknungskammer 11 zugeordnet.

Ein Produktauslass 22 ist im Bereich des zweiten Endes 13 angeordnet, wobei gemäß diesem Beispiel der Produktauslass 22 einer Unterseite der Trocknungskammer 11 zugeordnet ist. Mittels des Produktauslasses 22 werden gemäß dieser Ausführungsform die voneinander getrennten Feststoffanteile einerseits und die verdampften Flüssiganteile andererseits gemeinsam über den Produktauslass 22 abgeführt. Alternativ kann der Produktauslass 22 für die alleinige Abführung des Feststoffanteils vorgesehen sein, während ein weiterer Produktauslass oder eine Dampfabführeinrichtung beispielsweise an einer Oberseite der Trocknungskammer 11 im Bereich des zweiten Endes 13 zum Abführen des verdampften Flüssiganteils vorgesehen ist.

Eine weitere Wand 23 ist vorgesehen, die die erste Wand 15 zylinderförmig umgibt, wobei ein Abstand zwischen der ersten Wand 15 und der weiteren Wand 23 verbleibt. Die erste Wand 15 und die weitere Wand 23 bilden somit eine Doppelwand für die Trocknungskammer 11. Ein Zwischenraum zwischen der ersten Wand 15 und der weiteren Wand 23 ist bei der hier gezeigten Ausführungsform in mehrere miteinander unverbundene Segmente 24, 25, 26 aufgeteilt. Die Segmente 24, 25, 26 umgeben die Trocknungskammer 11 ringförmig. Die Segmente 24, 25, 26 sind jeweils zylinderförmig ausgebildet und weisen zwischen der ersten Wand 15 und der weiteren Wand 23 Trennwände 40 auf. Die Trennwände 40 sind rechtwinklig zur Fläche der ersten Wand 15 und der weiteren Wand 23 ausgerichtet und begrenzen jeweils den Zwischenraum der Segmente 24, 25, 26 seitlich. Die Trennwände 40 umlaufen die Trocknungskammer 11 ringförmig. Die Segmente 24, 25, 26 sind jeweils Bestandteil einer Wärmezuführeinrichtung zum Zuführen von Wärme, um die Trocknungskammer 11 zu erhitzen.

Das erste Segment 24 weist bei der hier gezeigten Ausführungsform einen ersten Wärmeträgereinlass 27 und einen zweiten Wärmeträgereinlass 28 auf. Die Wärmeträgereinlasse 27, 28 sind einer Oberseite der Trocknungskammer 11 zugeordnet und in Bezug zur Längsausrichtung der Trocknungskammer 11 an zwei voneinander abgewandten Enden des Segmentes 24 positioniert. Ein Wärmeträgerauslass 29 ist einer Unterseite der Trocknungskammer 11 zugeordnet und etwa mittig des Segmentes 24 in Bezug auf die Längsausrichtung der Trocknungskammer 11 positioniert. Die Wärmeträgereinlasse 27, 28 und der Wärmeträgerauslass 29 sind mit einem hier nicht näher dargestellten Wärmetauscher verbunden. Bei dem hier gezeigten Ausführungsbeispiel wird mittels des Wärmetauschers die Abwärme von Wasser eines Blockheizkraftwerkes einer Biogasanlage an einen Wärmeträger übertragen, der zwischen der weiteren Wand 23 und der ersten Wand 15 fließt, um die Außenfläche der ersten Wand 15 zum Aufheizen der Trocknungskammer 11 von Außen zu erhitzen.

Das zweite Segment 25 entspricht hinsichtlich seines Aufbaus weitgehend dem ersten Segment 24 und weist bei der hier gezeigten Ausführungsform einen ersten Wärmeträgereinlass 30 und einen zweiten Wärmeträgereinlass 31 auf. Die Wärmeträgereinlasse 30, 31 sind einer Oberseite der Trocknungskammer 11 zugeordnet und in Bezug zur Längsausrichtung der Trocknungskammer 11 an zwei voneinander abgewandten Enden des Segmentes 25 positioniert. Ein Wärmeträgerauslass 32 ist einer Unterseite der Trocknungskammer 11 zugeordnet und etwa mittig des Segmentes 25 in Bezug auf die Längsausrichtung der Trocknungskammer 11 positioniert. Die Wärmeträgereinlasse 30, 31 und der Wärmeträgerauslass 32 sind mit einem hier nicht näher dargestellten Wärmetauscher verbunden. Bei dem hier gezeigten Ausführungsbeispiel wird mittels des Wärmetauschers die Abwärme von Öl eines Blockheizkraftwerkes einer Biogasanlage an einen Wärmeträger übertragen, der zwischen der weiteren Wand 23 und der ersten Wand 15 fließt, um die Außenfläche der ersten Wand 15 zum Aufheizen der Trocknungskammer 11 von Außen zu erhitzen.

Das dritte Segment 24 weist nach der hier gezeigten Ausführungsform lediglich einen einzelnen Wärmeträgereinlass 33 auf, der einer Unterseite der Trocknungskammer 11 zugeordnet ist. Der Wärmeträgereinlass 33 ist in Bezug zur Längsausrichtung der Trocknungskammer 11 im Bereich eines Endes des Segmentes 26 positioniert. Hier ist der Wärmeträgereinlass 33 in Bezug auf eine Produktflussrichtung von dem ersten Ende 12 in Richtung des zweiten Endes 13 im Bereich eines stromaufwärts gelegenen Endes des Segmentes 26 positioniert. Der Wärmeträgereinlass 33 ist einem ringförmig ausgebildeten Verteilerraum 35 zugeordnet, der ein Ende des Segmentes 26 bildet.

Ein Wärmeträgerauslass 34 ist einer Oberseite der Trocknungskammer 11 zugeordnet und in Bezug auf die Produktflussrichtung in einem Bereich eines stromabwärts gelegenen Endes des Segmentes 26 positioniert. Der Wärmeträgerauslass 34 ist einem weiteren ringförmigen Verteilerraum 36 zugeordnet, der ein weiteres Ende des Segmentes 26 bildet. Die beiden Verteilerräume 35, 36 sind über den Zwischenraum zwischen der ersten Wand 15 und der weiteren Wand 23 miteinander verbunden.

Bei dem hier gezeigten Beispiel ist das Segment 26 mit einem Blockheizkraftwerk verbunden, wobei heiße Abgase des Blockheizkraftwerkes in das Segment 26 über den Wärmträgereinlass 33 eingeleitet werden, um die Außenfläche der ersten Wand 15 zum Aufheizen der Trocknungskammer 11 von Außen zu erhitzen.

Alternativ hierzu können der Wärmeträgereinlass 33 und der Wärmeträgerauslass 34 mit einem Wärmetauscher verbunden sein, um beispielsweise die Abwärme von Abgasen eines Blockheizkraftwerkes einer Biogasanlage an einen Wärmeträger zu übertragen.

Gemäß dieser Ausführungsform ist das erste Segment 24 dem ersten Ende 12 und das dritte Segment 26 dem zweiten Ende 13 benachbart angeordnet, während das zweite Segment 25 zwischen dem ersten Segment 24 und dem dritten Segment 26 angeordnet ist.

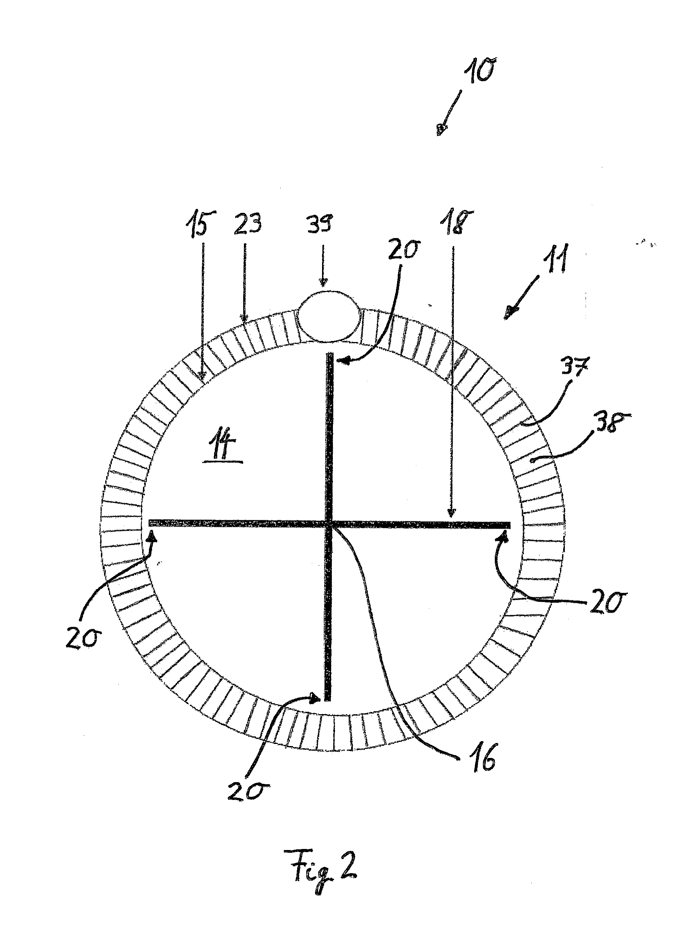

Fig. 2 zeigt einen geschnittenen schematischen Querschnitt der erfindungsgemäßen Trocknungsvorrichtung 10 gemäß Fig. 1, wobei der Querschnitt im Bereich des Segmentes 26 zwischen den Verteilerräumen 35, 36 positioniert ist. In dem Zwischenraum zwischen der ersten Wand 15 und der weiteren Wand 23 sind mehrere Kammerwände 37 angeordnet, wobei hier für eine bessere Übersichtlichkeit nicht alle Kammerwände 37 mit einem Bezugszeichen versehen sind. Die Kammerwände 37 erstrecken sich parallel zur Längsausrichtung der Trocknungskammer 11 und sind radial in Bezug zur Symmetrieachse der Trocknungskammer 11 ausgerichtet. Aufgrund der Kammerwände 37 sind mehrere Kammern 38 gebildet, die sich in Längsausrichtung der Trocknungskammer zwischen dem ersten Verteilerraum 35 und dem zweiten Verteilerraum 36 erstrecken. Für eine bessere Übersichtlichkeit sind nicht alle Kammern 38 mit einem Bezugszeichen versehen. Bei einer von der Trocknungskammer 11 gelösten Stirnfläche im Bereich des zweiten Endes 13 sind die Kammern 38, beispielsweise zum Reinigen, zugänglich. Alternativ können die Kammerwände 37 schräg zueinander ausgerichtet sein, so dass sich beispielsweise Kammern 38 ergeben, die einen im Wesentlichen dreieckigen Querschnitt aufweisen.

Weiter weist die Trocknungskammer 11 ein Förderelement 39 auf. Das Förderelement 39 ist bei diesem Ausführungsbeispiel als eine Schneckenwelle ausgebildet, die sich in Längsausrichtung der Trocknungskammer 11 im Wesentlichen über die gesamte Länge der Trocknungskammer 11 erstreckt. Das Förderelement 39 ist einer dem Innenraum 14 zugewandten Innenfläche der ersten Wand 15 zugeordnet. Die Innenfläche der ersten Wand 15 ist aufgrund des Förderelementes 39 unterbrochen. Somit gelangt das Förderelement 39 im Gebrauch der Trocknungsvorrichtung 10 in Kontakt mit dem zu trocknenden Flüssigprodukt bzw. mit dem abgetrennten Feststoffanteil. Mittels des Förderelementes 39 ist das zu trocknende Flüssigprodukt bzw. der abgetrennte Feststoffanteil in Produktflussrichtung von dem ersten Ende 12 in Richtung des zweiten Endes 13 beförderbar.

Das Förderelement 39 ist mit einer hier nicht näher dargestellten Steuerung verbunden. Mittels der Steuerung ist die Drehzahl des als Schneckenwelle ausgebildeten Förderelementes 39 steuerbar. Hierdurch ist die Fördergeschwindigkeit des zu trocknenden Flüssigproduktes bzw. des abgetrennten Feststoffanteils in Produktflussrichtung steuerbar.

Bei der hier gezeigten Ausführungsform ist das Förderelement 39 einer Oberseite der Trocknungskammer 11 zugeordnet. Alternativ hierzu kann das Förderelement 39 einem Seitenbereich und/oder einem Bodenbereich der Trocknungskammer 11 zugeordnet sein. Auch können mehrere Förderelemente 39 vorgesehen sein.

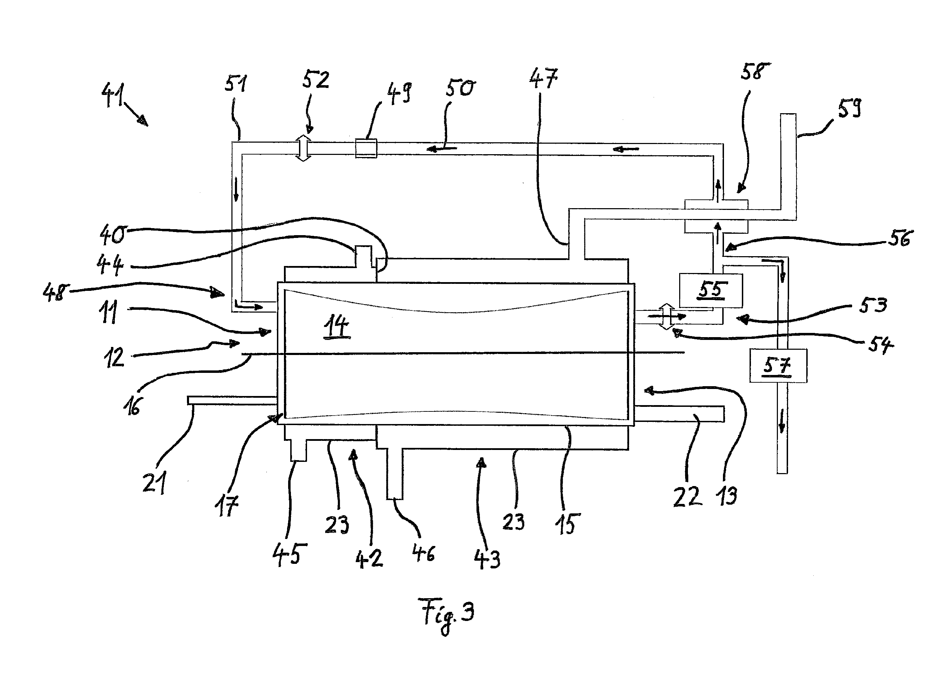

Fig. 3 zeigt eine geschnittene schematische Seitenansicht einer zweiten erfindungsgemäßen Trocknungsvorrichtung 41. Gleiche Gegenstände wie zuvor tragen die gleichen Bezugszeichen. Insoweit wird auch auf die vorangegangene Beschreibung verwiesen.

Die Trocknungsvorrichtung 41 hat einen Trocknungsbereich 11, der hier ebenfalls als eine Trocknungskammer 11 mit einem Innenraum 14 ausgebildet ist. Der Produkteinlass 21 ist bei diesem Ausführungsbeispiel am ersten Ende 12 im Bereich einer ersten Stirnseite der Trocknungskammer 11 in einem unteren Bereich der Trocknungskammer 11 angeordnet. Der Produktauslass 22 ist an dem vom ersten Ende abgewandten zweiten Ende 13 im unteren Bereich einer von der ersten Stirnseite abgewandten zweiten Stirnseite angeordnet. Bei dieser Ausführung weisen der Produkteinlass 21 und der Produktauslass 22 jeweils eine Pressschnecke auf. Hierbei wird mittels des Produkteinlasses 21 das zu trocknende Flüssigprodukt in den Innenraum 14 der Trocknungskammer 11 eingebracht, während mittels des Produktauslasses 22 der getrocknete Feststoffanteil aus dem Innenraum 14 der Trocknungskammer 11 heraus geführt wird.

Zum Erhitzen der ersten Wand 15 ist bei dem hier gezeigten Ausführungsbeispiel ein erstes Segment 42 und ein zweites Segment 43 vorgesehen, die jeweils Bestandteil einer Wärmezuführeinrichtung sind. Das erste Segment 42 hat an einer Oberseite der Trocknungskammer 11 einen Wärmeträgereinlass 44 und an einer Unterseite der Trocknungskammer 11 einen Wärmeträgerauslass 45. Hier wird als Wärmeträger für das erste Segment 42 heißes Wasser aus einem hier nicht näher dargestellten Blockheizkraftwerk genutzt. Das Wasser hat beim Einführen über den Wärmeträgereinlass 44 in den Zwischenraum zwischen der ersten Wand 15 und der weiteren Wand 23 eine Temperatur von etwa 90 °C. Gemäß diesem Beispiel erstreckt sich das erste Segment 42 ausgehend vom ersten Ende 12 über mindestens ¼ der Gesamtlänge der Trocknungskammer 11. Insbesondere erfolgt im Bereich des ersten Segmentes 42 eine Vorerwärmung des Flüssigproduktes.

Das zweite Segment 43 hat an einer Unterseite der Trocknungskammer 11 und benachbart zum ersten Segment einen Wärmeträgereinlass 46 und an einer Oberseite der Trocknungskammer 11 und im Bereich des zweiten Endes 13 einen Wärmeträgerauslass 47. Für das zweite Segment 43 wird bei dieser Ausführungsform ein heißes Abgas aus einem Blockheizkraftwerk genutzt. Das Abgas hat beim Einführen über den Wärmeträgereinlass 46 in den Zwischenraum zwischen der ersten Wand 15 und der weiteren Wand 23 eine Temperatur von etwa 430 °C. Gemäß diesem Beispiel erstreckt sich das zweite Segment 43 ausgehend vom zweiten Segment 43 über mindestens ¾ der Gesamtlänge der Trocknungskammer 11 bis zum zweiten Ende 13. Insbesondere erfolgt im Bereich des zweiten Segmentes 42 eine Aufheizung des Flüssigproduktes, die zum Verdampfen des Flüssiganteils führt.

Darüber hinaus ist bei diesem Ausführungsbeispiel eine Dampfzuführeinrichtung 48 vorgesehen. Mittels der Dampfzuführeinrichtung 48 wird im oberen Bereich der ersten Stirnseite des ersten Endes Trockendampf in den Innenraum 14 der Trocknungskammer 11 eingeleitet. Die Dampfzuführeinrichtung 48 weist einen Ventilator 49 auf, mit dem der Trockendampf gemäß Pfeilen 50 in einer Leitung 51, nämlich einer Dampfleitung, geführt ist. Der Leitung 51 ist eine Temperaturregelung 52, bei diesem Beispiel ein Thermostat, zugeordnet. Mittels der Temperaturregelung 52 wird die Zufuhr von Trockendampf und/oder des zu trocknenden Flüssigproduktes gesteuert. Insbesondere bei einer Trockendampftemperatur von unter 100 °C wird die Zufuhr des zu trocknenden Flüssigproduktes unterbrochen. Vorzugsweise wird die Zufuhrmenge des zu trocknenden Flüssigproduktes bei einer Trockendampftemperatur über einem vorgegebenen Schwellwert, insbesondere von über 120 °C, erhöht.

Weiter ist bei diesem Ausführungsbeispiel eine Dampfabführeinrichtung 53 vorgesehen. Mittels der Dampfabführeinrichtung 53 wird der Dampf aus dem Innenraum 14 der Trocknungskammer 11 im oberen Bereich der zweiten Stirnseite des zweiten Endes 13 abgeführt. Die Dampfabführeinrichtung 53 hat eine Temperaturregelung 54, die hier als ein Thermostat ausgebildet ist. Mittels der Temperaturregelung 54 wird die Zufuhr und/oder Abfuhr des Trockendampfes bzw. Dampfes sowie des Flüssigproduktes bzw. Feststoffanteils gesteuert. Vorzugsweise ist eine Steuerung zum Steuern der Zuführung und/oder Abführung des Flüssigproduktes, des Trockendampfes, des verdampften Flüssiganteils und/oder des Feststoffanteils vorgesehen.

Darüber hinaus weist die Dampfabführeinrichtung gemäß diesem Beispiel eine Feststoffabtrenneinrichtung 55 auf, der hier als ein Staubfilter ausgebildet ist, um feine Staubpartikel aus dem Dampf heraus zu filtern.

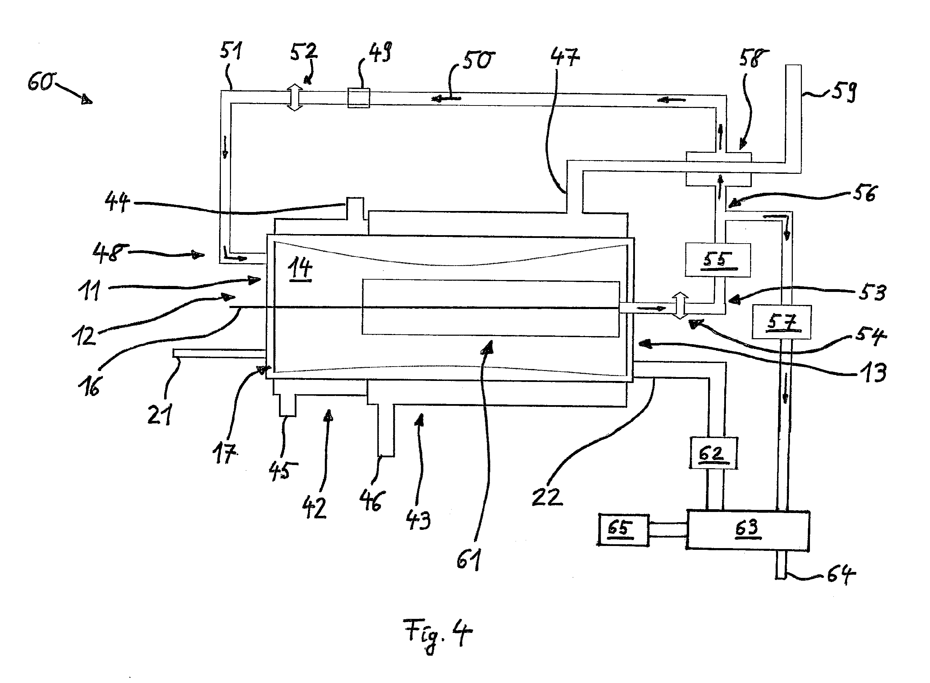

Mittels eines Dampfabscheiders 56 wird bei diesem Ausführungsbeispiel Dampf mit einem überschüssigen Flüssiganteil abgeschieden bzw. vom übrigen Dampf abgetrennt. Dieser abgeschiedene Dampf wird einer weiteren Feststoffabtrenneinrichtung 57 zur Nachbehandlung zugeführt. Bei diesem Ausführungsbeispiel ist die Feststoffabtrenneinrichtung 57 als ein Ammoniakwäscher ausgebildet, der ammoniakhaltige Bestandteile aus dem Dampf entfernt. Alternativ oder zusätzlich kann eine Geruchsstoffverbrennung mittels eines hier nicht näher dargestellten Feststoffbrenners oder eine Vakuumtrocknung als Nachbehandlung vorgesehen sein. Bei einer Vakuumtrocknung kann eine Abkühlung des Dampfes erfolgen, um einen Unterdruck oder ein Vakuum in der Trocknungsvorrichtung 41, insbesondere im Trocknungsbereich 11, zu erzeugen. Der abgeschiedene Dampf kann anschließend an die Umgebung abgegeben werden oder - wie nachfolgend zu Fig. 4 noch näher erläutert - weiter verwendet werden.

Der mit dem Dampfabscheider 56 nicht abgeschiedene Dampf wird einem Wärmetauscher 58 zugeführt. Mittels des Wärmetauschers 58 wird der Dampf übererhitzt, so dass dieser als Trockendampf erneut dem Trocknungsbereich 11 zugeführt wird. Bei diesem Ausführungsbeispiel wirkt der Wärmetauscher 58 mit dem Wärmeträgerauslass 47 zusammen. Somit wird die Abgaswärme zunächst zum Erhitzen der ersten Wand 15 bzw. des Trocknungsbereiches 11 und anschließend zum erhitzen des Dampfes mittels des Wärmetauschers 58 genutzt. Die so genutzten Abgase werden anschließend über ein Abgasrohr 59 frei gesetzt. Alternativ oder zusätzlich kann die Wärme der Abgase zum Herstellen von Warmwasser mittels eines hier nicht näher dargestellten Wärmetauschers genutzt werden.

Fig. 4 zeigt eine geschnittene schematische Seitenansicht einer weiteren erfindungsgemäßen Trocknungsvorrichtung 60. Die Trocknungsvorrichtung 60 entspricht weitgehend der Trocknungsvorrichtung 41 gemäß Fig. 3. Insoweit wird auch auf die vorangegangene Beschreibung verwiesen.

Die Trocknungsvorrichtung 60 weist jedoch zusätzlich eine Vorreinigungseinrichtung 61 auf. Die Vorreinigungseinrichtung 61 ist im Innenraum 14 des Trocknungsbereiches 11 bzw. der Trocknungskammer 11 angeordnet. Die Vorreinigungseinrichtung 61 dient zum Reinigen und/oder Filtern des aus der Trocknungskammer 11 abzuführenden Dampfes. Hierbei werden mit der Vorreinigungseinrichtung 61 Feststoffe aus dem Feststoffanteil des zu trocknenden Flüssigproduktes im Innenraum 14 zurück gehalten. Hierzu ist die Vorreinigungseinrichtung 61 der Dampfabführeinrichtung 53 vorgeschaltet. Bei diesem Ausführungsbeispiel ist die Vorreinigungseinrichtung 61 als ein Vorfilter für den aus der Trocknungskammer 11 abzuführenden Dampf ausgebildet.

Die Vorreinigungseinrichtung 61 ist um die Antriebsachse 16 bzw. mittels der Antriebsachse 16 rotierbar. Somit wird die Vorreinigungseinrichtung 61 synchron bzw. zusammen mit der Mischeinrichtung 17 angetrieben. Des Weiteren ist ein hier nicht näher dargestellter, insbesondere zur Mischeinrichtung 17, separater Antrieb, beispielsweise ein Elektromotor, vorgesehen. Zum Antreiben und/oder zum Reinigen der Vorreinigungseinrichtung 61 ist diese mit dem separaten Antrieb um die Antriebsachse 16 rotierbar. Hierbei ist die Rotationsgeschwindigkeit zum Reinigen der Vorreinigungseinrichtung 61 höher als die Rotationsgeschwindigkeit der Mischeinrichtung 17. Zum Reinigen der Vorfiltereinrichtung 61 ist die Rotationsgeschwindigkeit so groß, dass sich mindestens ein Großteil der die Vorreinigungseinrichtung 61 verstopfenden Feststoffe aus der Vorreinigungseinrichtung 61 unter Einwirkung der Zentrifugalkraft heraus geschleudert werden.

Der Produktauslass 22 zum Abführen des Feststoffanteils aus dem Innenraum 14 ist bei diesem Ausführungsbeispiel mit einer Pelletiereinrichtung 62 verbunden. Somit wird der Feststoffanteil mit dem Produktauslass 22 direkt der Pelletiereinrichtung 62 zur Weiterverarbeitung zugeführt. In der Pelletiereinrichtung 62 erfolgt zunächst eine Zerkleinerung des Feststoffanteils mit einer hier nicht näher dargestellten Zerkleinereinrichtung. Weiter weist die Pelletiereinrichtung eine hier ebenfalls nicht näher dargestellte Pelletierpresse auf, um den zuvor zerkleinerten Feststoffanteil in Pellets zu pressen. Die Pellets können anschließend gelagert, abtransportiert und/oder unmittelbar weiter verarbeitet werden.

Bei dem hier gezeigten Ausführungsbeispiel erfolgt eine unmittelbar folgende Weiterverarbeitung der Pellets bzw. des Feststoffanteils, indem die Pellets einem Feststoffbrenner 63 zugeführt werden. Der getrocknete Feststoffanteil bzw. die Pellets dienen als Brennmaterial zum Betreibend es Feststoffbrenners. Hierbei ist der Feststoffbrenner zum Verkohlen des Brennmaterials, nämlich des Feststoffanteils bzw. der Pellets, ausgebildet. Aufgrund der Verkohlung verbleibt von dem Feststoffanteil Organokohle als Endprodukt zurück. Die Organokohle wird auf hier nicht näher dargestellte Weise aus dem Feststoffbrenner 63 heraus geführt. Anschließend kann die Organokohle als hochwertiges Produkt in der Land- und/oder Tierwirtschaft eingesetzt werden.

Bei diesem Ausführungsbeispiel wird mit dem Dampfabscheider 56 mindestens ein Teil des Dampfes abgezweigt und ebenfalls dem Feststoffbrenner 63 zugeführt. Hierbei werden Geruchsstoffe und/oder Schadstoffe in dem Dampf mit dem Feststoffbrenner 63 verbrannt. Der so gereinigte Dampf ist anschließend mindestens weitgehend unschädlich und wird mittels eines Auslass 64 an die Umgebung abgegeben.

Bei diesem Ausführungsbeispiel ist dem Feststoffbrenner 63 ein Antrieb 64, nämlich ein Stirlingmotor, zugeordnet. Der Antrieb 64 wird mittels der Abwärme des Feststoffbrenners 63 angetrieben, wobei mittels des Antriebs 64 elektrische Energie erzeugt wird.

Alternativ oder zusätzlich kann die Abwärme des Dampfes aus dem Innenraum 14, die Abwärme des Feststoffbrenners 63 und/oder die Abwärme des Antriebes 65 zum Beheizen des Trocknungsbereiches 11, eines Gebäudes, eines Stalls und/oder zum Erzeugen von Warmwasser verwendet werden.

Des Weiteren kann eine hier nicht näher dargestellte Turbine, nämlich eine Dampfturbine, vorgesehen sein. Die Dampfturbine kann der Dampfabführeinrichtung 53 zugeordnet sein, wobei die Dampfturbine mittels des aus dem Innenraum 14 abgeführten Dampfes angetrieben wird. Hierdurch ist mit der Dampfturbine elektrischen Energie erzeugbar.

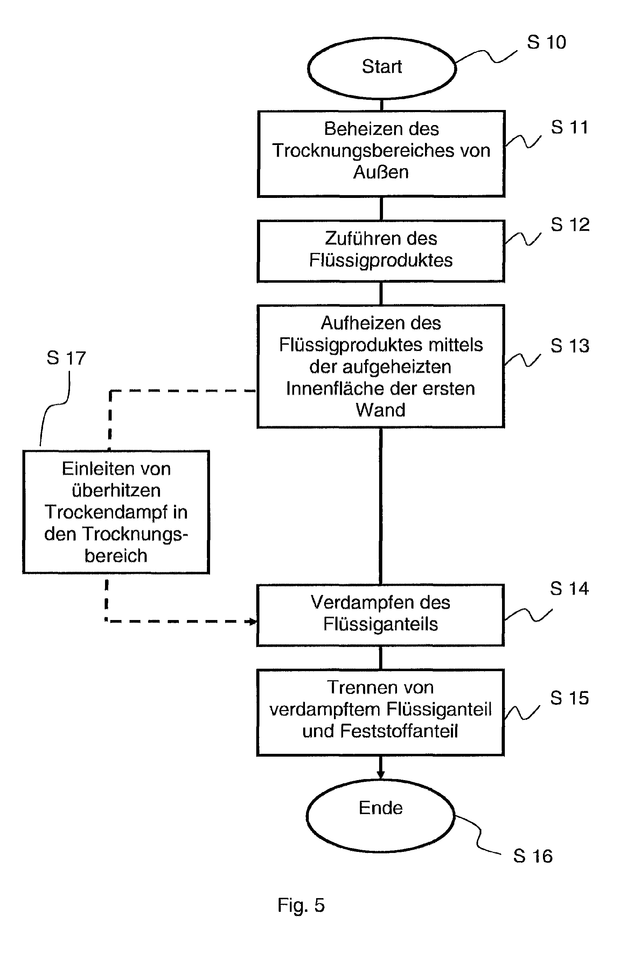

Fig. 5 zeigt eine schematische Darstellung eines Flussdiagramms für ein erstes erfindungsgemäßes Verfahren für eine erfindungsgemäße Trocknungsvorrichtung 10, 41, 60. Das erfindungsgemäße Verfahren wird in einem Schritt S10 gestartet. Hiernach wird der Trocknungsbereich 11 von Außen beheizt. Hierzu wird die Abwärme einer Biogasanlage, nämlich die Abwärme eines Blockheizkraftwerkes einer Biogasanlage verwendet.

Sodann wird in einem Schritt S12 ein Flüssigprodukt zugeführt und mittels des Produkteinlasses 21 in den Innenraum 14 des Trocknungsbereiches 11 eingeleitet. Bei dem Flüssigprodukt handelt es sich beispielsweise um Gärreste aus der Biogasanlage, Gülle, Klärschlamm oder sonstiges pflanzliches und/oder tierisches Material. Gemäß Schritt S13 wird das Flüssigprodukt im Trocknungsbereich 11 mittels der von Außen aufgeheizten Innenfläche der ersten Wand 15 aufgeheizt. Das Flüssigprodukt wird in der Trocknungskammer auf eine solche Temperatur aufgeheizt, dass der Flüssiganteil des Flüssigproduktes gemäß Schritt S14 verdampft wird. Hierzu wird die Innenfläche der ersten Wand 15 von Außen auf eine Temperatur von über 100°C erhitzt. Zu diesem Zweck wird der Außenfläche der ersten Wand 15 ein Wärmeträger mit einer Temperatur von vorzugsweise mindestens 130°C zugeführt.

Das eingeleitete Flüssigprodukt wird somit gemäß Schritt S15 in einen Feststoffanteil und einen verdampften Flüssiganteil getrennt. Der Feststoffanteil und der hiervon getrennte und verdampfte Flüssiganteil werden gemeinsam über den Produktauslass 22 oder getrennt über den Produktauslasse 22 für den Feststoffanteil und einer Dampfabführeinrichtung 53 für den verdampften Flüssiganteil aus dem Innenraum 14 des Trocknungsbereiches 11 abgeführt und einer getrennten Weiterverarbeitung zugeführt. Hierbei wird der Feststoffanteil beispielsweise zu einem wertvollen Düngemittel wie beispielsweise Organokohle weiterverarbeitet. Mit einem Schritt S16 ist das erfindungsgemäße Verfahren beendet.

Nach einer weiteren alternativ denkbaren Ausführungsform ist ein Schritt S 17 vorgesehen, wonach überhitzter Trockendampf in den Trocknungsbereich 11 eingeleitet wird. Bei dem überhitzten Trockendampf kann es sich um überhitzten Wasserdampf handeln, der dem Flüssigprodukt im Trocknungsbereich 11 Feuchtigkeit entzieht. Gemäß dem dargestellten Beispiel ist der Schritt S 17 zwischen den Schritten S13 und S14 angeordnet. Alternativ können die Schritte S 13 und S17 jedoch auch parallel bzw. gleichzeitig erfolgen. Hierdurch werden die Trennung des Feststoffanteils vom Flüssiganteil und das Verdampfen des Flüssiganteils beschleunigt.

Nach einer auch unabhängig von der vorliegenden Erfindung denkbaren Ausführungsform kann auf ein Aufheizen der Innenfläche der ersten Wand 15 gemäß Schritt S13 verzichtet werden und stattdessen ausschließlich überhitzter Trockendampf zum Aufheizen des Flüssigproduktes gemäß Schritt S 17 in den Trocknungsbereich 11 eingeleitet werden.

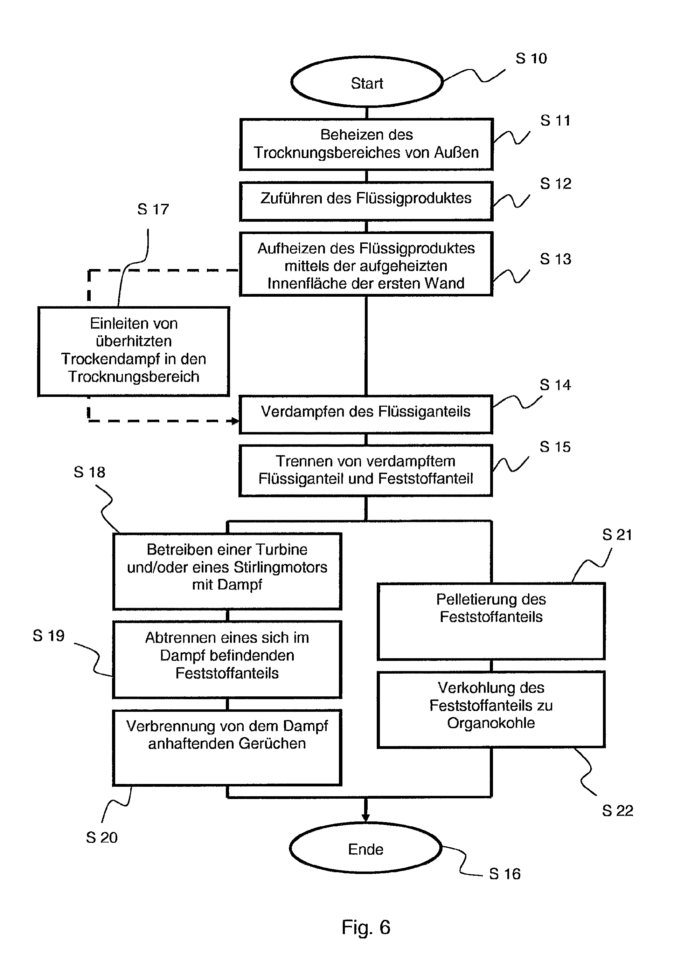

Fig. 6 zeigt eine schematische Darstellung eines Flussdiagramms für ein weiteres erfindungsgemäßes Verfahren für eine erfindungsgemäße Trocknungsvorrichtung 10, 41, 60. Dieses Verfahren basiert auf dem Verfahren nach Fig. 5, so dass hinsichtlich der Schritte S 10 bis S 17 auf die vorangegangene Beschreibung verwiesen wird. Die demgegenüber zusätzlichen Schritte S 18 bis S 22 sind zwischen den Schritten S 15 und S 16 angeordnet.

Nach dem Trennen des verdampften Flüssiganteils von dem Feststoffanteil gemäß Schritt S 15 wird mit dem Dampf aus dem Trocknungsbereich 11 eine Turbine und/oder ein Antrieb 65, wie beispielsweise ein Stirlingmotor, angetrieben. Mittels der Turbine und/oder dem Stirlingmotor wird elektrischer Energie erzeugt, die beispielsweise in das öffentliche Netz eingespeist wird. Nachfolgend wird in einem Schritt S 19 ein sich im aus dem Trocknungsbereich 11 abgeführten Dampf befindender Feststoffanteil abgetrennt bzw. herausgefiltert. Zusammen mit dem Dampf können Schwebteilchen, Partikel und/oder Aerosole aus dem Innenraum 14 des Trocknungsbereiches 11 mit gerissen werden. Diese Bestandteile des Feststoffanteils werden aus dem Dampf heraus gefiltert. Hierdurch wird bei einer nachfolgenden Verwendung des Dampfes eine Verunreinigung oder die Gefahr einer Beschädigung von Einrichtungen, Vorrichtungen und/oder Geräten deutlich vermindert. Alternativ zu der hier gezeigten Ausführung kann der Schritt S 19 auch vor dem Schritt S 18 erfolgen.

In einem nachfolgenden Schritt S 20 werden dem Dampf anhaftenden Gerüche, Geruchsstoffe und/oder Schadstoffe verbrannt. Hierzu wird der Dampf einem Feststoffbrenner 63 zugeführt. Hiernach kann der gereinigte Dampf an die Umgebung abgegeben werden, wobei eine unnötige Belastung der Umwelt vermieden ist.

Parallel zu den Schritten S 18 bis S 20 wird der Feststoffanteil in einem Schritt S 21 pelletiert. Somit werden aus dem getrockneten Feststoffanteil Pellets hergestellt. Diese Pellets sind schütt- bzw. fließfähig und somit einfach lagerbar, transportierbar und/oder weiter verarbeitbar. In einem nachfolgenden Schritt S 22 wird der Feststoffanteil zu Organokohle verkohlt. Entweder kann der getrocknete Feststoffanteil unmittelbar nach dessen Herstellung oder nach der Verarbeitung zu Pellets zu Organokohle verkohlt werden.

Die Organokohle ist als hochwertiges Produkt in der Landwirtschaft, insbesondere zur Verbesserung der Bodenbeschaffenheit und/oder zum Humusaufbau, und/oder in der Viehzucht einsetzbar. Die Organokohle bindet Kohlenstoffdioxid effektiv, zuverlässig und langfristig, wie es beispielsweise von der Terra Petra bekannt ist. Mittels der Erfindung ist die Organokohle auf effiziente und energiesparende Weise herstellbar. Dies wird insbesondere durch die mehrmalige Nutzung der Abwärme der Biogasanlage, des Blockheizkraftwerkes und/oder des verdampften Flüssiganteils realisiert. Insbesondere ist eine zusätzliche Zuführung von externen Brennstoff vermeidbar, wodurch Kosten für externe Brennstoffe vermeidbar sind.

Das Volumen des Feststoffanteils ist auf einen Bruchteil des Volumens des Flüssigproduktes verringerbar, wodurch der Lager- und/oder Transportaufwand erheblich reduziert ist.

### Bezugszeichenliste:

| | | | |
|---|---|---|---|
| 10 | Trocknungsvorrichtung | 49 | Ventilator |
| 11 | Trocknungskammer | 50 | Pfeil |
| 12 | Erstes Ende | 51 | Leitung |
| 13 | Zweites Ende | 52 | Temperaturregelung |
| 14 | Innenraum | 53 | Dampfabführeinrichtung |
| 15 | Erste Wand | 54 | Temperaturregelung |
| 16 | Antriebsachse | 55 | Feststoffabtrenneinrichtung |
| 17 | Mischeinrichtung | 56 | Dampfabscheider |
| 18 | Halterung | 57 | Feststoffabtrenneinrichtung |
| 19 | Halterung | 58 | Wärmetauscher |
| 20 | Stahlseil | 59 | Abgasrohr |
| 21 | Produkteinlass | 60 | Trocknungsvorrichtung |
| 22 | Produktauslass | 61 | Vorreinigungseinrichtung |
| 23 | Weitere Wand | 62 | Pelletiereinrichtung |
| 24 | Segment | 63 | Feststoffbrenner |
| 25 | Segment | 64 | Auslass |
| 26 | Segment | 65 | Antrieb |
| 27 | Wärmeträgereinlass | | |
| 28 | Wärmeträgereinlass | | |
| 29 | Wärmeträgerauslass | S10 | Start |
| 30 | Wärmeträgereinlass | S11 | Beheizen |
| 31 | Wärmeträgereinlass | S12 | Zuführen |
| 32 | Wärmeträgerauslass | S13 | Aufheizen |
| 33 | Wärmeträgereinlass | S14 | Verdampfen |
| 34 | Wärmeträgerauslass | S15 | Trennen |
| 35 | Verteilerraum | S16 | Ende |
| 36 | Verteilerraum | | |
| 37 | Kammerwand | S17 | Einleiten von Trockendampf |
| 38 | Kammer | S18 | Betreiben von Turbine/Motor |
| 39 | Förderelement | S19 | Abtrennen von Feststoffen |
| 40 | Trennwand | S20 | Verbrennung von Gerüchen |
| 41 | Trocknungsvorrichtung | S21 | Pelletierung |
| 42 | Segment | S22 | Verkohlung |
| 43 | Segment | | |
| 44 | Wärmeträgereinlass | | |
| 45 | Wärmeträgerauslass | | |
| 46 | Wärmeträgereinlass | | |
| 47 | Wärmeträgerauslass | | |
| 48 | Dampfzuführeinrichtung | | |

## Patentansprüche

1. Trocknungsvorrichtung für eine Biogasanlage zum Trocknen eines Flüssigproduktes, insbesondere von Biomasse, mit einem Trocknungsbereich (11), wobei mindestens ein Teil der zum Betrieb des Trocknungsbereiches (11) notwendigen Wärmeenergie von der Biogasanlage bereit gestellt ist, **dadurch gekennzeichnet, dass** eine den Trocknungsbereich (11) begrenzende erste Wand (15) mittels mindestens einer der Außenfläche der ersten Wand (15) zugeordneten Wärmezufuhreinrichtung zum Aufheizen des Trocknungsbereiches (11) von Außen erhitzbar ist, und eine Dampfzuführeinrichtung (48) zum Einleiten von überhitztem Trockendampf in den Trocknungsbereich (11) vorgesehen ist, wobei der Trockendampf beim Einleiten eine Temperatur über dem Siedepunkt des Flüssiganteils des Flüssigproduktes hat.

2. Trocknungsvorrichtung nach Anspruch 1, **dadurch gekennzeichnet, dass** die Wärmezufuhreinrichtung mindestens eine weitere Wand (23) aufweist, die die erste Wand (15) mindestens teilweise zur Ausbildung einer Doppelwand umgibt, wobei vorzugsweise ein Wärmeträgermittel mittels eines Einlasses (27, 28, 30, 31, 33) in die Doppelwand einleitbar und mittels eines Auslasses (29, 32, 34) aus der Doppelwand ausleitbar ist.

3. Trocknungsvorrichtung nach Anspruch 1 oder 2, **dadurch gekennzeichnet, dass** die Wärmezufuhreinrichtung mehrere, insbesondere voneinander unabhängige, Segmente (24, 25, 26) zum Zuführen eines Wärmeträgermittels zu den Segmenten (24, 25, 26) zugeordneten Teilflächen der Außenfläche der ersten Wand (15) hat.

4. Trocknungsvorrichtung nach einem der vorhergehenden Ansprüche, **dadurch gekennzeichnet, dass** die Wärmezufuhreinrichtung, insbesondere jedes Segment (24, 25, 26), mindestens einen Wärmetauscher aufweist, wobei vorzugsweise mittels des Wärmetauschers die Abwärme der Biogasanlage und/oder eines Blockheizkraftwerkes an ein Wärmeträgermittel mindestens teilweise übertragbar ist, wobei insbesondere die Abwärme von Wasser, Öl und/oder Abgasen der Biogasanlage und/oder des Blockheizkraftwerkes übertragbar ist.

5. Trocknungsvorrichtung nach einem der vorhergehenden Ansprüche, **dadurch gekennzeichnet, dass** mindestens ein Wärmeträgermittel der Biogasanlage und/oder des Blockheizkraftwerkes, insbesondere Wasser, Öl und/oder Abgase, direkt der Außenfläche der ersten Wand (15) zuführbar ist.

6. Trocknungsvorrichtung nach einem der vorhergehenden Ansprüche, **dadurch gekennzeichnet, dass** der Trocknungsbereich (11) eine Trocknungskammer, insbesondere mit einem zylinderförmigen Innenraum (14), und/oder ein Rohr, insbesondere ein Rohrschlangenwärmetauscher, aufweist, wobei vorzugsweise dem Trocknungsbereich (11), insbesondere dem Innenraum (14), mindestens eine, insbesondere relativ zur fest stehenden Trocknungskammer, rotierbare Mischeinrichtung (17) aufweist, und/oder dass der Trocknungsbereich (11) als eine Druckkammer, insbesondere zum Realisieren eines Überdruckes im Trocknungsbereich (11), ausgebildet ist, wobei vorzugsweise aus der Druckkammer abgeleiteter Dampf einen Überdruck aufweist.

7. Trocknungsvorrichtung nach einem der vorhergehenden Ansprüche, **dadurch gekennzeichnet, dass** der Trocknungsbereich (11) mindestens ein der Innenfläche der ersten Wand (15) zugeordnetes Förderelement (39) zum Bewirken einer Förderbewegung für das zu trocknende Flüssigprodukt, dessen Flüssiganteil und/oder Feststoffanteil, insbesondere von einem ersten Ende (12) des Trocknungsbereiches (11) zu einem zweiten Ende (13) des Trocknungsbereiches (11), hat, wobei vorzugsweise sich das, insbesondere als Schneckenwelle ausgebildete, Förderelement (39) in Längsrichtung des Trocknungsbereiches (11) erstreckt.

8. Trocknungsvorrichtung nach einem der vorhergehenden Ansprüche, **dadurch gekennzeichnet, dass** eine Abführeinrichtung zum Abführen der voneinander getrennten Flüssiganteile und Feststoffanteile des Flüssigproduktes aus dem Trocknungsbereich (11) vorgesehen ist, wobei vorzugsweise die Abführeinrichtung einerseits eine separate Dampfabführeinrichtung (53) zum Abführen des verdampften Flüssiganteils und andererseits einen separaten Feststoffauslass (22) zum Abführen des Feststoffanteils aus dem Trocknungsbereich (11) aufweist.

9. Trocknungsvorrichtung nach einem der vorhergehenden Ansprüche, **dadurch gekennzeichnet, dass** der Trockendampf, insbesondere Wasserdampf, beim Einleiten eine Temperatur über dem Siedepunkt des Flüssiganteils des Flüssigproduktes, insbesondere von über 100°C, vorzugsweise von über 120°C, hat und/oder der Trockendampf mittels eines Wärmetauschers (58) über Abwärme der Biogasanlage erhitzbar ist.

10. Trocknungsvorrichtung nach einem der vorhergehenden Ansprüche, **dadurch gekennzeichnet, dass** eine Turbine und/oder ein Stirlingmotor (65) vorgesehen sind, die vorzugsweise mit aus dem Trocknungsbereich (11) abgeführtem Dampf, insbesondere zum Erzeugen von elektrischer Energie, antreibbar sind, und/oder dass eine, insbesondere dem Trocknungsbereich (11) nachgeschaltete, Feststoffabtrenneinrichtung (55, 57) zum Abtrennen von Feststoffen aus dem, insbesondere aus dem Trocknungsbereich (11) abgeführten, Dampf vorgesehen ist.

11. Trocknungsvorrichtung nach einem der vorhergehenden Ansprüche, **dadurch gekennzeichnet, dass** eine, insbesondere innerhalb des Trocknungsbereiches (11) angeordnete, Vorreinigungseinrichtung (61) zum Reinigen und/oder Filtern eines aus dem Trocknungsbereich (11) abzuführenden Dampfes vorgesehen ist, wobei vorzugsweise die Vorreinigungseinrichtung (61) einer Dampfabführeinrichtung (48) vorgeschaltet und/oder die Vorreinigungseinrichtung (61), insbesondere zusammen mit einer Mischeinrichtung (17), rotierbar ist, und/oder dass eine Pelletiereinrichtung (62) zum Herstellen von Pellets aus dem Feststoffanteil des Flüssigproduktes vorgesehen ist, wobei vorzugsweise der Feststoffanteil der Pelltiereinrichtung (62) mittels einer Fördereinrichtung, insbesondere automatisch, aus dem Trocknungsbereich (11) zuführbar ist.

12. Trocknungsvorrichtung nach einem der vorhergehenden Ansprüche, **dadurch gekennzeichnet, dass** ein Feststoffbrenner (63), insbesondere zum Verkohlen des Feststoffanteils und/oder zum Verbrennen von dem Flüssiganteil, vorzugsweise dem Dampf, anhaftenden Gerüchen, vorgesehen ist, wobei vorzugsweise mit dem Feststoffbrenner (63) der Feststoffanteil des Flüssigproduktes aus dem Trocknungsbereich (11) zu Organokohle verkohlbar ist.

13. Verfahren zum Trocknen eines Flüssigproduktes, insbesondere von Biomasse, mit einer Trocknungsvorrichtung (10, 41, 60) nach einem der vorhergehenden Ansprüche, wobei das Flüssigprodukt einem Trocknungsbereich (11) der Trocknungsvorrichtung (10, 41, 60) zugeführt wird, und ein Flüssiganteil des Flüssigproduktes zum Trennen des Flüssiganteils von einem Feststoffanteil des Flüssigproduktes innerhalb des Trocknungsbereiches (11) unter Verwendung von Wärmeenergie einer Biogasanlage und/oder eines Blockheizkraftwerkes verdampft wird, **dadurch gekennzeichnet, dass** der Trocknungsbereich (11) von Außen beheizt wird, und überhitzter Trockendampf in den Trocknungsbereich mit eine Temperatur über dem Siedepunkt des Flüssiganteils des Flüssigproduktes in den Trocknungsbereich (11) eingeleitet wird.

14. Verfahren nach Anspruch 13, **dadurch gekennzeichnet, dass** der überhitzte Trockendampf, insbesondere Wasserdampf, mit einer Temperatur von über 100°C, vorzugsweise von über 120°C, in den Trocknungsbereich (11) eingeleitet wird, und/oder der Flüssiganteil des Flüssigproduktes im Trocknungsbereich (11) verdampft wird, wobei vorzugsweise der aus dem Trocknungsbereich (11) abgeführte Dampf zum Antreiben einer Turbine und/oder eines Stirlingmotors (65), insbesondere zum Erzeugen von elektrischer Energie, verwendet wird.

15. Verfahren nach einem der Ansprüche 13 oder 14, **dadurch gekennzeichnet, dass** der Feststoffanteil zu Pellets verarbeitet wird, wobei vorzugsweise ein Feststoffbrenner (63) mit dem Feststoffanteil, insbesondere den Pellets, beschickt wird, und/oder dass der Feststoffanteil mittels eines Feststoffbrenners (63) zu Organokohle verkohlt wird.
